# EUROPEAN PATENT APPLICATION

(11) **EP 4 703 061 A1**
(43) Date of publication of application: **04.03.2026**
(21) Application number: 24797077.5
(22) Date of filing: 24.04.2024
(51) Int. Cl.: B21D 22/20, B21D 22/26, B62D 25/02, B62D 25/04, B62D 25/20

(54) **BLANK, METHOD FOR PRODUCING STRUCTURAL MEMBER, AND STRUCTURAL MEMBER**

(30) Priority: 28.04.2023 JP 2023075319
(71) Applicant: NIPPON STEEL CORPORATION, Chiyoda-ku Tokyo 100-8071 (JP)
(72) Inventor: KIMOTO, Naoki, Tokyo 100-8071 (JP); KUBO, Masahiro, Tokyo 100-8071 (JP); IGUCHI, Keinosuke, Tokyo 100-8071 (JP); YOSHIDA, Hiroshi, Tokyo 100-8071 (JP); IRIKAWA, Hideaki, Tokyo 100-8071 (JP); FUJITA, Soshi, Tokyo 100-8071 (JP); SUZUKI, Yuki, Tokyo 100-8071 (JP)
(74) Representative: Zimmermann & Partner Patentanwälte mbB
(86) International application number: PCT/JP2024/016121
(87) International publication number: WO 2024/225331

(57) **Abstract**

A blank (20, 20A) includes multiple steel sheets. The multiple steel sheets are disposed to form an annular shape in plan view of the blank (20, 20A) and joined to each other. At least one of a first and a second steel sheets (21, 22) and a third steel sheet (23) are each a plated steel sheet having a base steel sheet (21a, 22a, 23a) and an aluminum-based plating layer (21b, 22b, 23b). An end part of the first steel sheet (21) and an end part of the second steel sheet (22) form an overlap part (241) having a largest sheet thickness (tₘₐₓ). A deposition amount (W1, W2) of the plating layer (21b, 22b) of at least one of the first and the second steel sheets (21, 22) is 60 g/m² or less and is less than a deposition amount (W3) of the plating layer (23b) of the third steel sheet (23).

## Description

### TECHNICAL FIELD

The present disclosure relates to a blank for hot stamping. The present disclosure further relates to a production method for a structural member using the blank, and the structural member.

### BACKGROUND ART

Structures such as a body of an automobile are formed of multiple structural members. A structural member is produced by press-forming a blank, for example. In order to ensure high strength and high dimensional accuracy, the structural member may be produced in a press forming method referred to as hot stamping. The hot stamping is a technique of heating a blank, which is a steel sheet, to a temperature in the austenite zone, press-forming the blank with press tooling, and quenching the blank by holding the blank in the press tooling for heat dissipation (rapid cooling).

Patent literature 1 discloses an overlapped blank for hot stamping. The overlapped blank of Patent Literature 1 includes a first steel sheet and a second steel sheet having a smaller area than the first steel sheet. The second steel sheet is overlaid on a surface of the first steel sheet and welded to the first steel sheet. Both the first steel sheet and the second steel sheet are aluminum-plated steel sheets, and the deposition amount of the plating layer on both surfaces is 20 g/m² or more and 120 g/m² or less. Provided that the mean deposition amount of the aluminum-based plating layer on both surfaces of the first steel sheet is W1, the deposition amount of the aluminum-based plating layer on the surface of the second steel sheet that is not in contact with the first steel sheet is W2, the sheet thickness of the first steel sheet is t1, and the sheet thickness of the second steel sheet is t2, the overlapped blank of Patent Literature 1 satisfies relations that 30 ≤ (W1-W2) ≤ 100 and (W1/W2)² × (t1/t2) ≥ 1.5. According to Patent Literature 1, by satisfying these relations, the alloying reaction of the plating layer that increases emissivity can quickly proceed to the surface in the overlap part between the first steel sheet and the second steel sheet in heating for hot stamping.

Patent Literature 2 discloses a method of producing a body side structural frame of an automobile from multiple blanks. According to Patent Literature 2, multiple blanks are joined to form a composite blank, and the composite blank is press-formed to produce a body side structural frame. In Patent Literature 2, hot forming (hot stamping) of the composite blank is described.

### CITATION LIST

### PATENT LITERATURE

Patent Literature 1: Japanese Patent No. 6642777
Patent Literature 2: Japanese Translation of PCT International Application Publication No. 2021-528248

### SUMMARY OF INVENTION

### TECHNICAL PROBLEM

In recent years, to simplify production processes for structures, integration of two or more members at the stage of a blank has been studied. For example, Patent Literature 2 discloses that a composite blank having an annular shape in plan view is subjected to hot stamping, thereby producing an annular body side structural frame including a pillar, a rocker and the like integrated with each other. Patent Literature 2 discloses that adjacent steel sheets in a composite blank are overlapped and joined to each other by spot welding. When the composite blank includes such an overlap part, it is difficult to ensure a process window in production of the structural member. Specifically, for hot stamping, the blank is heated until the microstructure thereof is austenitized. However, the overlap part formed by partial overlapping of steel sheets has a larger sheet thickness than a non-overlap part, and therefore the temperature of the overlap part is slow to rise. For example, when the blank includes a plated steel sheet, while the overlap part having the largest sheet thickness in the blank is being heated in order to ensure the strength of the overlap part by hot stamping, alloying of the plating layer of a steel sheet (non-overlap part) already heated to an intended temperature excessively proceeds, the diffusion layer becomes thicker, and the corrosion resistance (rust resistance) owing to the plating layer may deteriorate or be lost. Thus, when the blank includes an overlap part, it is difficult to ensure a process window of the heating condition. Furthermore, the heating rate of the overlap part having the largest sheet thickness in the blank may be a bottleneck, and the productivity of the structural member may decrease.

An object of the present disclosure is to provide a blank for hot stamping from which a structural member that combines a strength of an overlap part having a largest sheet thickness and a rust resistance function of each steel sheet can be produced.

### SOLUTION TO PROBLEM

A blank for hot stamping according to the present disclosure includes multiple steel sheets. The multiple steel sheets are disposed to form an annular shape in plan view of the blank and joined to each other. The multiple steel sheets include a first steel sheet, a second steel sheet and a third steel sheet. An end part of the first steel sheet is overlaid on and joined to an end part of the second steel sheet, thereby forming an overlap part with the end part of the second steel sheet. The overlap part has a largest sheet thickness in the blank. At least one of the first steel sheet and the second steel sheet and the third steel sheet are each a plated steel sheet. The plated steel sheet has a base steel sheet and an aluminum-based plating layer that covers both surfaces of the base steel sheet. A deposition amount (g/m²) of the aluminum-based plating layer on both surfaces of the base steel sheet of at least one of the first steel sheet and the second steel sheet is 60 or less and is less than a deposition amount (g/m²) of the aluminum-based plating layer on both surfaces of the base steel sheet of the third steel sheet.

### ADVANTAGEOUS EFFECTS OF INVENTION

With a blank for hot stamping according to the present disclosure, a structural member that combines a strength of an overlap part having a largest sheet thickness and a rust resistance function of each steel sheet can be produced.

### BRIEF DESCRIPTION OF THE DRAWINGS

[FIG. 1] FIG. 1 is a plan view of a structural member according to a first embodiment.
[FIG. 2] FIG. 2 is a cross-sectional view taken along the line II-II in FIG. 1.
[FIG. 3A] FIG. 3A is a schematic diagram for illustrating a production method for the structural member according to the first embodiment, showing a blank according to the first embodiment.
[FIG. 3B] FIG. 3B is a schematic diagram for illustrating the production method for the structural member according to the first embodiment, showing the blank according to the first embodiment.
[FIG. 3C] FIG. 3C is a schematic diagram for illustrating the production method for the structural member according to the first embodiment, showing the blank according to the first embodiment.
[FIG. 3D] FIG. 3D is a schematic diagram for illustrating the production method for the structural member according to the first embodiment, showing the blank according to the first embodiment.
[FIG. 3E] FIG. 3E is a schematic diagram for illustrating the production method for the structural member according to the first embodiment.
[FIG. 3F] FIG. 3F is a schematic diagram for illustrating the production method for the structural member according to the first embodiment.
[FIG. 3G] FIG. 3G is a schematic diagram for illustrating the production method for the structural member according to the first embodiment.
[FIG. 4A] FIG. 4A is a cross-sectional view of the structural member produced in the production method according to the first embodiment.
[FIG. 4B] FIG. 4B is a cross-sectional view of the structural member produced in the production method according to the first embodiment.
[FIG. 4C] FIG. 4C is a cross-sectional view of the structural member produced in the production method according to the first embodiment.
[FIG. 5] FIG. 5 is a cross-sectional view of a blank according to a second embodiment.
[FIG. 6] FIG. 6 is a plan view of a structural member according to a variation of the embodiments described above.
[FIG. 7A] FIG. 7A is a diagram showing a division pattern of a structural member in a first example.
[FIG. 7B] FIG. 7B is a diagram showing another division pattern of the structural member in the first example.
[FIG. 7C] FIG. 7C is a diagram showing another division pattern of the structural member in the first example.
[FIG. 7D] FIG. 7D is a diagram showing another division pattern of the structural member in the first example.
[FIG. 7E] FIG. 7E is a diagram showing another division pattern of the structural member in the first example.
[FIG. 7F] FIG. 7F is a diagram showing another division pattern of the structural member in the first example.
[FIG. 7G] FIG. 7G is a diagram showing another division pattern of the structural member in the first example.
[FIG. 8A] FIG. 8A is a diagram showing a division pattern of a structural member in a second example.
[FIG. 8B] FIG. 8B is a diagram showing another division pattern of the structural member in the second example.
[FIG. 8C] FIG. 8C is a diagram showing another division pattern of the structural member in the second example.
[FIG. 8D] FIG. 8D is a diagram showing another division pattern of the structural member in the second example.

### DESCRIPTION OF EMBODIMENTS

A blank for hot stamping according to an embodiment includes multiple steel sheets. The multiple steel sheets are disposed to form an annular shape in plan view of the blank and joined to each other. The multiple steel sheets include a first steel sheet, a second steel sheet and a third steel sheet. An end part of the first steel sheet is overlaid on and joined to an end part of the second steel sheet, thereby forming an overlap part with the end part of the second steel sheet. The overlap part has a largest sheet thickness in the blank. At least one of the first steel sheet and the second steel sheet and the third steel sheet are each a plated steel sheet. The plated steel sheet has a base steel sheet and an aluminum-based plating layer that covers both surfaces of the base steel sheet. A deposition amount (g/m²) of the aluminum-based plating layer on both surfaces of the base steel sheet of at least one of the first steel sheet and the second steel sheet is 60 or less and is less than a deposition amount (g/m²) of the aluminum-based plating layer on both surfaces of the base steel sheet of the third steel sheet (a first configuration).

The blank according to the first configuration includes the first steel sheet, the second steel sheet and the third steel sheet. An end part of the first steel sheet and an end part of the second steel sheet form an overlap part having the largest sheet thickness in the blank. The deposition amount of the aluminum-based plating layer of at least one of the first steel sheet and the second steel sheet is less than the deposition amount of the aluminum-based plating layer of the third steel sheet. The deposition amount of the aluminum-based plating layer of at least one of the first steel sheet and the second steel sheet is 60 g/m² or less. Since the first steel sheet and/or the second steel sheet are relatively thin-plated steel sheets in this way, when the blank is heated for hot stamping, alloying of the aluminum-based plating layer of the first steel sheet and/or the second steel sheet quickly proceeds, and both surfaces of the first steel sheet and/or the second steel sheet quickly change color from white silver to black or a color close to black. Therefore, the emissivity of the overlap part formed by the first steel sheet and the second steel sheet increases during heating of the blank. As a result, the overlap part can be more quickly heated to a temperature in the austenite zone, so that the heating time of the overlap part can be reduced. Therefore, heating of the blank required for hot stamping can be completed before alloying of the aluminum-based plating layer of each steel sheet excessively proceeds and the diffusion layer becomes thick. As a result, the strength of the overlap part can be ensured by hot stamping, and the corrosion resistance (rust resistance) of each steel sheet can be ensured.

As described above, with the blank according to the first configuration, a structural member that combines the strength of the overlap part having the largest sheet thickness and the rust resistance function of each steel sheet can be produced. That is, with the blank, the heating rate of the overlap part having the largest sheet thickness can be increased, and a process window of the heating condition in production of the structural member is more likely to be ensured. In addition, by increasing the heating rate of the overlap part, the heating time of the blank for hot stamping can be reduced, and therefore, the productivity of the structural member can be improved. Furthermore, since the heating time of the blank is reduced, the energy consumption of the production of the structural member is reduced, and the emissions of greenhouse effect gas when heating the blank for hot stamping can be reduced.

With the blank according to the first configuration, the deposition amount of the aluminum-based plating layer of the third steel sheet is more than the deposition amount of the aluminum-based plating layer of at least one of the first steel sheet and the second steel sheet forming the overlap part. That is, the third steel sheet has higher rust resistance performance than the first steel sheet and/or the second steel sheet. Therefore, in the structural member produced from the blank, the rust resistance performance can be partially increased. For example, by arranging the third steel sheet in a part of the structural member that required relatively high rust resistance performance, required rust resistance performance of the structural member as a whole can be ensured.

In the blank according to the first configuration, the multiple steel sheets may include two or more steel sheets having different sheet thicknesses. In this case, provided that a sheet thickness of the overlap part is tₘₐₓ, and a sheet thickness of a steel sheet having a smallest sheet thickness among the multiple steel sheets is tₘᵢₙ, it is preferable that tₘₐₓ/tₘᵢₙ ≤ 3.0 (a second configuration).

When the blank includes two or more steel sheets having different sheet thicknesses, the difference in sheet thickness between the overlap part and the non-overlap part is more significant compared with the case where all the steel sheets included in the blank have the same sheet thickness. That is, the difference in sheet thickness between the overlap part having the largest sheet thickness in the blank and the steel sheet having the smallest sheet thickness is more significant. When the difference in sheet thickness is too large, when the structural member is produced from the blank by hot stamping, the overlap part is more slowly heated than the steel sheet having the smallest sheet thickness, and it is likely to be difficult to ensure a process window of the heating condition. In view of this, according to the second configuration, the ratio between the sheet thickness tₘₐₓ of the overlap part and the smallest sheet thickness tₘᵢₙ: tₘₐₓ/tₘᵢₙ is set to 3.0 or less. As a result, heating of the overlap part, which is the thickest part, is likely to be ended before alloying of the plating layer of the thinnest steel sheet excessively proceeds, and the process window of the heating condition is more likely to be ensured.

In the blank according to the first configuration, the multiple steel sheets may include two or more steel sheets having different sheet thicknesses. Provided that a sheet thickness of the overlap part is tₘₐₓ, and a sheet thickness of a steel sheet having a smallest sheet thickness among the multiple steel sheets is tₘᵢₙ, it is possible that tₘₐₓ/tₘᵢₙ ≤ 4.0. In this case, a surface of at least one of the first steel sheet and the second steel sheet that is located on an outer side of the overlap part is preferably coated with a film that is black in color (a third configuration).

According to the third configuration, in at least one of the first steel sheet and the second steel sheet forming the overlap part, the surface located on the outer side of the overlap part is provided with a film that is black in color. In this way, the emissivity of the overlap part can be increased in advance, and heating of the overlap part can be accelerated when the blank is heated for hot stamping. Therefore, even when the difference in sheet thickness between the overlap part having the largest sheet thickness in the blank and the steel sheet having the smallest sheet thickness is more significant, the process window of the heating condition is more likely to be ensured. For example, even if the ratio between the sheet thickness tₘₐₓ of the overlap part and the smallest sheet thickness tₘᵢₙ: tₘₐₓ/tₘᵢₙ is increased to 4.0, the process window is likely to be ensured.

A production method for a structural member according to an embodiment includes a step of preparing the blank according to any one of the first to third configurations, a step of heating the multiple steel sheets included in the blank to an austenite transformation completion temperature or higher, and a step of shaping and quenching the heated blank into a structural member having an annular shape in plan view with press tooling (a fourth configuration).

A structural member according to an embodiment includes a member main body. The member main body is formed of multiple steel sheets joined to each other. The member main body has an annular shape in plan view. The multiple steel sheets include a first steel sheet, a second steel sheet and a third steel sheet. An end part of the first steel sheet is overlaid on and joined to an end part of the second steel sheet, thereby forming an overlap part in the member main body with the end part of the second steel sheet. The overlap part has a largest sheet thickness in the member main body. At least one of the first steel sheet and the second steel sheet and the third steel sheet are each a plated steel sheet having an aluminum-based plating layer on both surfaces of a base steel sheet. A thickness of the aluminum-based plating layer of at least one of the first steel sheet and the second steel sheet is less than a thickness of the aluminum-based plating layer of the third steel sheet (a fifth configuration).

Concerning the structural member according to the fifth configuration, in the overlap part, provided that a maximum value of a Vickers hardness of a steel sheet among the first steel sheet and the second steel sheet that is located on a front surface side of the member main body is HVₘₐₓ, and a minimum value of the Vickers hardness is HVₘᵢₙ, HVₘₐₓ-HVₘᵢₙ may be 30% or less of HVₘₐₓ (a sixth configuration).

In the structural member according to the fifth or sixth configuration, the member main body may include a curved part. For example, the curved part is convexly curved outward of the member main body in plan view of the structural member. At least one of the first steel sheet and the second steel sheet may be located in the curved part (a seventh configuration).

The structural member according to any one of the fifth to seventh configurations may be a door ring part of an automobile. In this case, the member main body may include a front pillar, a center pillar and a rocker that connects the front pillar and the center pillar to each other (an eighth configuration).

In the following, embodiments of the present disclosure will be described with reference to the drawings. In the drawings, the same or corresponding components are denoted by the same reference numerals, and redundant descriptions will be omitted.

### <First Embodiment>

### [Structural Member]

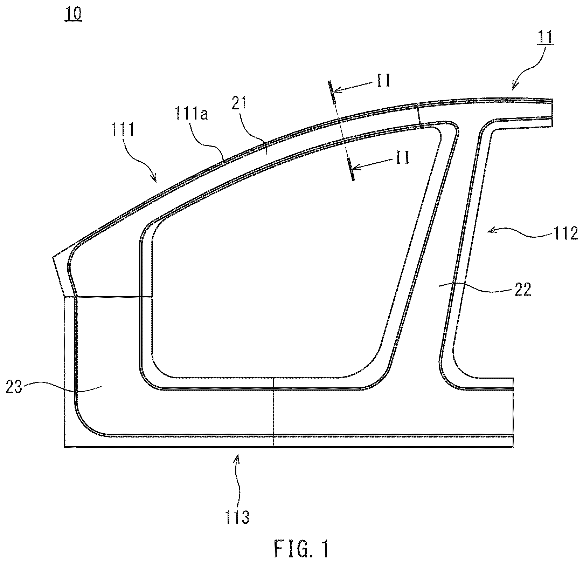

FIG. 1 is a diagram (plan view) showing a structural member 10 according to a first embodiment placed on a horizontal surface viewed from above. The structural member 10 is used for a body of an automobile, for example. The structural member 10 is typically a door ring part of an automobile. This embodiment will be described with reference to an example in which the structural member 10 is a door ring part.

The structural member 10 is a hot-stamped member. That is, the structural member 10 is produced by performing hot stamping (hot press working) on a blank formed of multiple steel sheets. The structural member 10 includes a member main body 11. The member main body 11 has an annular shape in plan view of the structural member 10. The member main body 11 includes a front pillar 111, a center pillar 112 and a rocker 113.

When the structural member 10 is assembled to the body of the automobile, the center pillar 112 is disposed rearward of the front pillar 111. The center pillar 112 generally extends in the up-and-down direction of the body. The front pillar 111 extends toward the center pillar 112. The front pillar 111 includes a curved part 111a. The curved part 111a is a part that is convexly curved outward of the member main body 11 in plan view of the structural member 10. In the example in FIG. 1, the curved part 111a is located in an upper part (an upper front pillar part) of the front pillar 111. When the structural member 10 is assembled to the body of the automobile, the rocker 113 is disposed below the front pillar 111 and the center pillar 112. The rocker 113 connects the front pillar 111 and the center pillar 112 to each other.

In this embodiment, the member main body 11 is formed of multiple steel sheets 21, 22 and 23 joined to each other. In the example in FIG. 1, the front pillar 111 is mainly formed by the steel sheets 21 and 23. The steel sheet 21 is located in the curved part 111a of the front pillar 111. That is, at least a part of the steel sheet 21 forms a part or the whole of the curved part 111a. The center pillar 112 is mainly formed of the steel sheet 22. The rocker 113 is formed of the steel sheets 22 and 23.

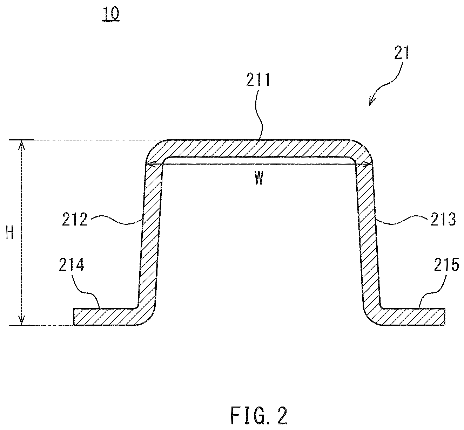

FIG. 2 is a cross-sectional view taken along the line II-II in FIG. 1. FIG. 2 shows a cross section of the structural member 10 taken at the position of the steel sheet 21 along the sheet thickness direction thereof. As shown in FIG. 2, the steel sheet 21 has an open cross section. The steel sheet 21 has a generally hat-like shaped in cross-sectional view of the structural member 10, for example. More specifically, the steel sheet 21 includes a top plate 211, vertical walls 212 and 213 and flanges 214 and 215. The vertical wall 212 is disposed on the opposite side of the top plate 211 to the vertical wall 213. In the cross-sectional view of the structural member 10, one ends of the vertical walls 212 and 213 are connected to the top plate 211. In the cross-sectional view of the structural member 10, the other ends of the vertical walls 212 and 213 are connected to the flanges 214 and 215, respectively. The flanges 214 and 215 project outward from the vertical walls 212 and 213 of the structural member 10, respectively.

In the structural member 10, a width W of the steel sheet 21, that is, the part of the structural member 10 that is located in the upper part of the front pillar 111 (FIG. 1), may be 15 mm or more and 300 mm or less. A height H of the steel sheet 21, that is, the part of the structural member 10 that is located in the upper part of the front pillar 111, may be 10 mm or more and 150 mm or less. The width W is the distance from the R-end on the vertical wall 212 side of the corner part between the top plate 211 and the vertical wall 212 to the R-end on the vertical wall 213 side of the corner part between the top plate 211 and the vertical wall 213, in the cross section of the structural member 10. The height H is the distance from the top plate 211 to the flange 214 or 215 in the sheet thickness direction of the top plate 211.

Although not shown, the other steel sheets 22 and 23 have an open cross section, as with the steel sheet 21. The steel sheets 22 and 23 can also have a generally hat-like shaped in cross-sectional view of the structural member 10. The width of a part of the steel sheet 22 that corresponds to the center pillar 112 (FIG. 1) may be 15 mm or more and 300 mm or less. The height of the part of the steel sheet 22 that corresponds to the center pillar 112 may be 10 mm or more and 150 mm or less. The width of a part of the steel sheet 23 that corresponds to a lower part of the front pillar 111 (FIG. 1) is 30 mm or more and 750 mm or less, for example. The height of the part of the steel sheet 23 that corresponds to the lower part of the front pillar 111 may be 25 mm or more and 150 mm or less. The width of a part of the steel sheet 23 that corresponds to the rocker 113 (FIG. 1) is 30 mm or more and 300 mm or less, for example. The height of the part of the steel sheet 23 that corresponds to the rocker 113 may be 25 mm or more and 150 mm or less.

The size of the structural member 10 having an annular shape in plan view is 1.0 m or more, for example. The size of the structural member 10 may be 4.0 m or less, for example. The size of the structural member 10 means the length of the line segment connecting two points that are the most distant from each other among any two points on the outer circumference of the structural member 10 when the structural member 10 placed on a horizontal surface is viewed in the vertical direction.

### [Production Method for Structural Member]

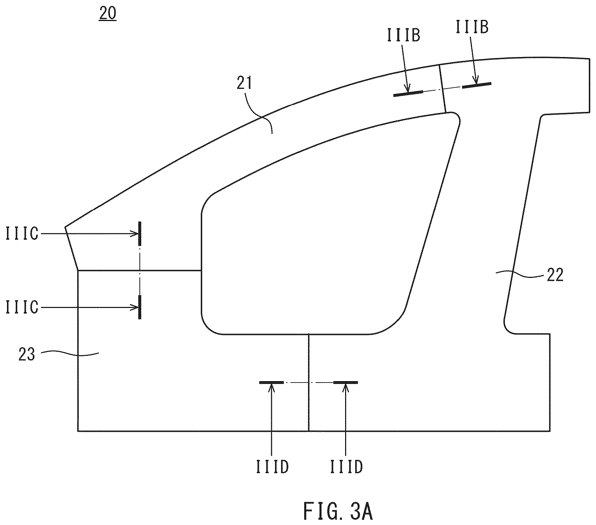

In the following, a production method for the structural member 10 will be described with reference to FIGS. 3A to 3G. The production method for the structural member 10 according to this embodiment includes a step of preparing a blank 20, a step of heating the blank 20 and a step of shaping the heated blank 20 into the structural member 10.

### (Preparation Step)

As shown in FIG. 3A, in the preparation step, a blank 20 having the expanded shape of the structural member 10 is prepared. The blank 20 includes multiple steel sheets 21, 22 and 23. The steel sheets 21, 22 and 23 are disposed to form an annular shape in plan view of the blank 20 and joined to each other.

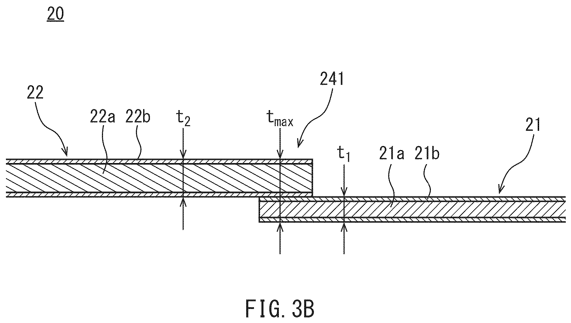

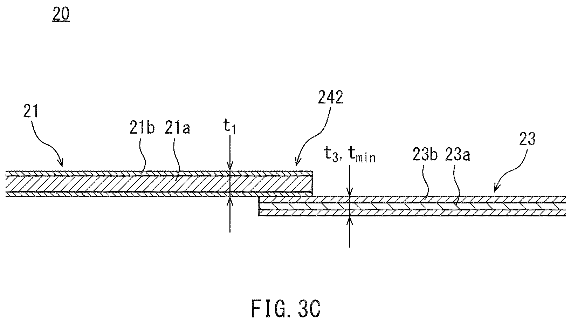

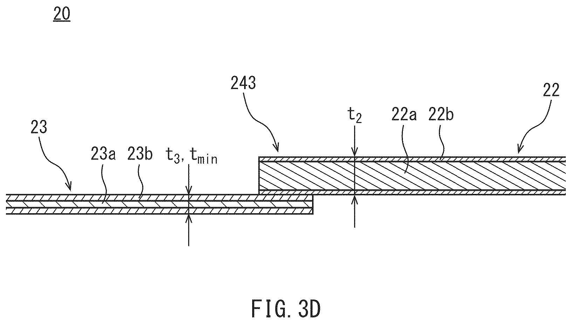

FIGS. 3B, 3C and 3D are cross-sectional views of the blank 20, showing junctures between the steel sheets 21, 22 and 23. FIGS. 3B, 3C and 3D are cross-sectional views taken along the lines IIIB-IIIB, IIIC-IIIC and IIID-IIID in FIG. 3A, respectively. With reference to FIGS. 3B and 3C, the steel sheet 21 is overlaid on each of the steel sheets 22 and 23 and joined thereto. That is, an end part of the steel sheet 21 is overlaid on an end part of the steel sheet 22 and joined thereto, thereby forming an overlap part 241 with the end part of the steel sheet 22. Similarly, another end part of the steel sheet 21 is overlaid on an end part of the steel sheet 23 and joined thereto, thereby forming an overlap part 242 with the end part of the steel sheet 23. With reference to FIG. 3D, the steel sheet 22 is lap-joined not only to the steel sheet 21 but also to the steel sheet 23. An end part of the steel sheet 22 is overlaid on an end part of the steel sheet 23 and joined thereto, thereby forming an overlap part 243 with the end part of the steel sheet 23. The steel sheets 21, 22 and 23 are joined by spot welding or laser welding, for example.

With reference to FIGS. 3B to 3D, the steel sheet 21 has a sheet thickness t₁. The steel sheet 22 has a sheet thickness t₂. The steel sheet 23 has a sheet thickness t₃. In the example of this embodiment, the sheet thickness t₁ of the steel sheet 21 and the sheet thickness t₂ of the steel sheet 22 are larger than the sheet thickness t₃ of the steel sheet 23. Therefore, the overlap part 241 between the steel sheets 21 and 22 has the largest sheet thickness tₘₐₓ in the blank 20. The sheet thickness tₘₐₓ of the overlap part 241 is larger than the sheet thickness of the overlap part 242 between the steel sheets 21 and 23 and the sheet thickness of the overlap part 243 between the steel sheets 22 and 23. The sheet thickness t₃ of the steel sheet 23 is the smallest sheet thickness tₘᵢₙ among the multiple steel sheets 21, 22 and 23 included in the blank 20.

When the multiple steel sheets 21, 22 and 23 have different sheet thicknesses t₁, t₂ and t₃ as in this embodiment, the ratio between the largest sheet thickness tₘₐₓ and the smallest sheet thickness tₘᵢₙ in the blank 20: tₘₐₓ/tₘᵢₙ is more than 2.0. In this case, the largest sheet thickness tₘₐₓ and the smallest sheet thickness tₘᵢₙ satisfy a relation that tₘₐₓ/tₘᵢₙ ≤ 3.0, for example. The largest sheet thickness tₘₐₓ and the smallest sheet thickness tₘᵢₙ may satisfy a relation that tₘₐₓ/tₘᵢₙ ≥ 2.5. The largest sheet thickness tₘₐₓ is 4.2 mm or less, for example. The sheet thickness tₘₐₓ may be 1.6 mm or more.

Each of the steel sheets 21, 22 and 23 is a plated steel sheet, more specifically, an aluminum-plated steel sheet. The steel sheet 21 has a base steel sheet 21a and an aluminum-based plating layer 21b. The steel sheet 22 has a base steel sheet 22a and an aluminum-based plating layer 22b. The steel sheet 23 has a base steel sheet 23a and an aluminum-based plating layer 23b. The sheet thickness t₁ of the steel sheet 21 is the total sheet thickness of the base steel sheet 21a and the aluminum-based plating layer 21b and is a mean sheet thickness of the steel sheet 21. The sheet thickness t₂ of the steel sheet 22 is the total sheet thickness of the base steel sheet 22a and the aluminum-based plating layer 22b and is a mean sheet thickness of the steel sheet 22. The sheet thickness t₃ of the steel sheet 23 is the total sheet thickness of the base steel sheet 23a and the aluminum-based plating layer 23b and is a mean sheet thickness of the steel sheet 23.

In the steel sheet 21, the aluminum-based plating layer 21b covers both surfaces of the base steel sheet 21a. The aluminum-based plating layer 21b is provided over the whole or substantially the whole of both surfaces of the base steel sheet 21a. Similarly, in the steel sheet 22, the aluminum-based plating layer 22b covers both surfaces of the base steel sheet 22a. The aluminum-based plating layer 22b is provided over the whole or substantially the whole of both surfaces of the base steel sheet 22a. Furthermore, in the steel sheet 23, the aluminum-based plating layer 23b covers both surfaces of the base steel sheet 23a. The aluminum-based plating layer 23b is provided over the whole or substantially the whole of both surfaces of the base steel sheet 23a.

The chemical composition of the aluminum-based plating layers 21b, 22b and 23b is not particularly limited. As the aluminum-based plating layers 21b, 22b and 23b, a well-known aluminum-based plating layer (a plating layer primarily containing aluminum) can be used. Although this is not intended to be limited, the aluminum-based plating layers 21b, 22b and 23b are Al-Si-based plating layers, for example. Each of the aluminum-based plating layers 21b, 22b and 23b may be the same or different from the aluminum-based plating layers of the other steel sheets.

With reference to FIG. 3B, the steel sheets 21 and 22 form the overlap part 241 having the largest sheet thickness tₘₐₓ in the blank 20. A deposition amount W1 (g/m²) of the aluminum-based plating layer 21b of the steel sheet 21 is less than a deposition amount W3 (g/m²) of the aluminum-based plating layer 23b of the steel sheet 23 (FIGS. 3C and 3D). Furthermore, a deposition amount W2 (g/m²) of the aluminum-based plating layer 22b of the steel sheet 22 is also less than the deposition amount W3 of the aluminum-based plating layer 23b of the steel sheet 23.

In the steel sheet 21, the deposition amount W1 is the deposition amount of the aluminum-based plating layer 21b on both surfaces of the base steel sheet 21a, and a mean deposition amount on both surfaces of the base steel sheet 21a. Typically, the deposition amount (g/m²) of the aluminum-based plating layer 21b on one surface of the base steel sheet 21a is substantially equal to the deposition amount (g/m²) of the aluminum-based plating layer 21b on the other surface of the base steel sheet 21a. However, the deposition amount of the aluminum-based plating layer 21b may vary between the front and back surfaces of the base steel sheet 21a due to the production conditions, for example. The deposition amount of the aluminum-based plating layer 21b may be different between one surface and the other surface of the base steel sheet 21a. Similarly, in the steel sheet 22, the deposition amount W2 is the deposition amount of the aluminum-based plating layer 22b on both surfaces of the base steel sheet 22a, and a mean deposition amount on both surfaces of the base steel sheet 22a. Typically, the deposition amount (g/m²) of the aluminum-based plating layer 22b on one surface of the base steel sheet 22a is substantially equal to the deposition amount (g/m²) of the aluminum-based plating layer 22b on the other surface of the base steel sheet 22a. However, the deposition amount of the aluminum-based plating layer 22b may vary between the front and back surfaces of the base steel sheet 22a due to the production conditions, for example. The deposition amount of the aluminum-based plating layer 22b may be different between one surface and the other surface of the base steel sheet 22a. In the steel sheet 23, the deposition amount W3 is the deposition amount of the aluminum-based plating layer 23b on both surfaces of the base steel sheet 23a, and a mean deposition amount on both surfaces of the base steel sheet 23a. Typically, the deposition amount (g/m²) of the aluminum-based plating layer 23b on one surface of the base steel sheet 23a is substantially equal to the deposition amount (g/m²) of the aluminum-based plating layer 23b on the other surface of the base steel sheet 23a. However, the deposition amount of the aluminum-based plating layer 23b may vary between the front and back surfaces of the base steel sheet 23a due to the production conditions, for example. The deposition amount of the aluminum-based plating layer 23b may be different between one surface and the other surface of the base steel sheet 23a.

The deposition amount W1 of the aluminum-based plating layer 21b of the steel sheet 21 and the deposition amount W2 of the aluminum-based plating layer 22b of the steel sheet 22 are each 60g/m² or less, and preferably 50 g/m² or less. The deposition amounts W1 and W2 are each 10 g/m² or more, for example, and preferably 20 g/m² or more. The deposition amount W3 of the aluminum-based plating layer 23b of the steel sheet 23 is 20 g/m² or more and 120 g/m² or less, for example. W3 is preferably 30 g/m² or more, and more preferably 35 g/m² or more. However, the deposition amount W3 is more than the deposition amounts W1 and W2. The deposition amount W3 is preferably 115 g/m² or less, and more preferably 100 g/m² or less. The difference between the deposition amount W1 of the aluminum-based plating layer 21b of the steel sheet 21 and the deposition amount W3 of the aluminum-based plating layer 23b of the steel sheet 23: W3-W1 is 20 (g/m²) or more, for example. W3-W1 may be 80 (g/m²) or less. Similarly, the difference between the deposition amount W2 of the aluminum-based plating layer 22b of the steel sheet 22 and the deposition amount W3 of the aluminum-based plating layer 23b of the steel sheet 23: W3-W2 is 20 (g/m²) or more, for example. W3-W2 may be 80 (g/m²) or less.

Although the method of forming the aluminum-based plating layers 21b, 22b and 23b on the base steel sheets 21a, 22a and 23a, respectively, is not particularly limited, a common hot dipping process is used, for example. Specifically, the aluminum-plated steel sheet 21 having an adjusted deposition amount W1 of the aluminum-based plating layer 21b can be obtained by immersing the base steel sheet 21a in a molten aluminum plating bath and then performing gas wiping with nitrogen or atmosphere, for example. Similarly, the aluminum-plated steel sheet 22 having an adjusted deposition amount W2 of the aluminum-based plating layer 22b can be obtained by immersing the base steel sheet 22a in a molten aluminum plating bath and then performing gas wiping with nitrogen or atmosphere, for example. Furthermore, the aluminum-plated steel sheet 23 having an adjusted deposition amount W3 of the aluminum-based plating layer 23b can be obtained by immersing the base steel sheet 23a in a molten aluminum plating bath and then performing gas wiping with nitrogen or atmosphere, for example. When the aluminum-based plating layer is formed in the hot dipping process, an Al-Fe-based alloy layer is formed at the interface between the base steel sheet and the aluminum-based plating layer, as a result of the elution of Fe in the hot dipping process.

The method of measuring the deposition amounts W1, W2 and W3 of the aluminum-based plating layers 21b, 22b and 23b may be the sodium hydroxidehexamethylenetetramine and hydrochloric acid peel weigh measuring method described in JIS G 3314: 2019, for example. Specifically, according to JIS G 3314: 2019, five or more test specimens having a predetermined surface area S (mm²) (such as 50 mm × 50 mm) are taken from each of the steel sheets 21, 22 and 22 of the blank 20, and the weight w1 (g) of each test specimen is measured. Then, each test specimen is immersed in a sodium hydroxide solution, and after it is ascertained that the gasification due to the dissolution of the plating ends, the test specimen is removed from the sodium hydroxide solution and rinsed with water. Then, each test specimen still wet after the rinsing is immersed in a hydrochloric acid solution added with hexamethylenetetramine until the gasification due to the dissolution of the plating ends. Each test specimen removed from the hexamethylenetetraminehydrochloric acid solution is rinsed with water and dried immediately, and the weight w2 (g) of the test specimen is measured again. The deposition amount W (g/m²) of the aluminum-based plating layer of each test specimen can be determined according to {(w1-w2)/S} × 10⁶. A mean value of the deposition amounts W of the five or more test specimens taken from each steel sheet is regarded as the deposition amount of the aluminum-based plating layer of the steel sheet.

However, when the test specimens taken from each of the steel sheets 21, 22 and 22 is small in size, the cross section of each of the aluminum-based plating layers 21b, 22b and 23b may be observed with an optical microscope (area: 100 µm × 100 µm), the thickness (µm) of the plating layer may be measured in three visual fields, and a mean value of the thicknesses measured in the three visual fields may be multiplied by three and converted to the deposition amount. In this case, for each of the steel sheets 21, 22 and 22, the deposition amount is calculated for each surface of the base steel sheet, and a mean value of the calculated deposition amounts (mean value for both surfaces) is regarded as the deposition amount of the aluminum-based plating layer. When there is an Al-Fe-based alloy layer at the interface between the base steel sheet and the aluminum-based plating layer, the thickness of the aluminum-based plating layer includes the thickness of the Al-Fe-based alloy layer. The thicknesses of the aluminum-based plating layers 21b and 22b of the steel sheets 21 and 22 that form the overlap part 241 having the largest thickness is smaller than the thickness of the aluminum-based plating layer 23b of the other steel sheet 23. The thickness of the aluminum-based plating layer 21b of the steel sheet 21 may be equal to or different from the thickness of the aluminum-based plating layer 22b of the steel sheet 22.

### (Heating Step)

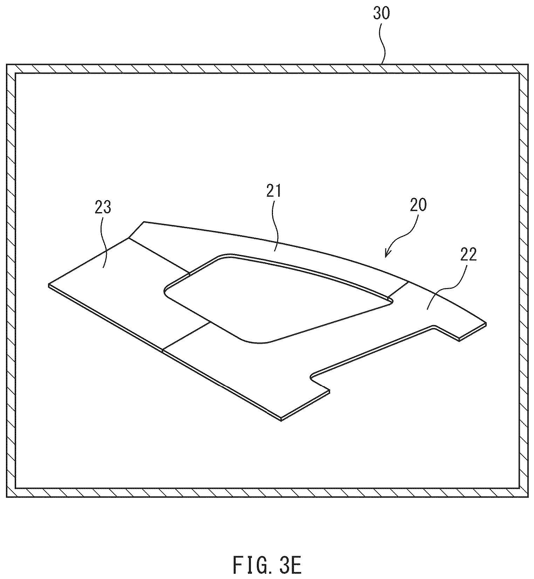

The prepared blank 20 is shaped into the structural member 10 (FIGS. 1 and 2) through hot stamping (hot press working). For the hot stamping, the blank 20 is subjected to the heating step. With reference to FIG. 3E, in the heating step, the blank 20 is heated in a heating furnace 30, for example. The multiple steel sheets 21, 22 and 23 included in the blank 20 are heated to an austenite transformation completion temperature (A_{c3} point) or higher. The steel sheets 21, 22 and 23 are heated to 900°C or more, for example. In this way, the whole or substantially the whole of the microstructure of the steel sheets 21, 22 and 23 is transformed into the austenite phase, for example.

### (Shaping Step)

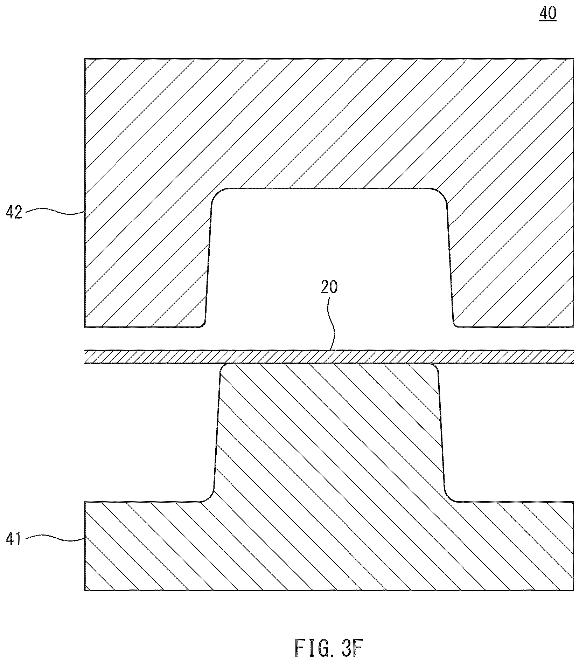

With reference to FIG. 3F, in the shaping step, using press tooling 40, the heated blank 20 is shaped into the structural member 10 having an annular shape in plan view (FIGS. 1 and 2) and quenched. The blank 20 heated in the heating step is removed from the heating furnace 30 (FIG. 3E) and conveyed to the press tooling 40. The press tooling 40 is attached to a well-known pressing device. The press tooling 40 includes a punch 41 and a die 42, for example. The blank 20 is placed between the punch 41 and the die 42.

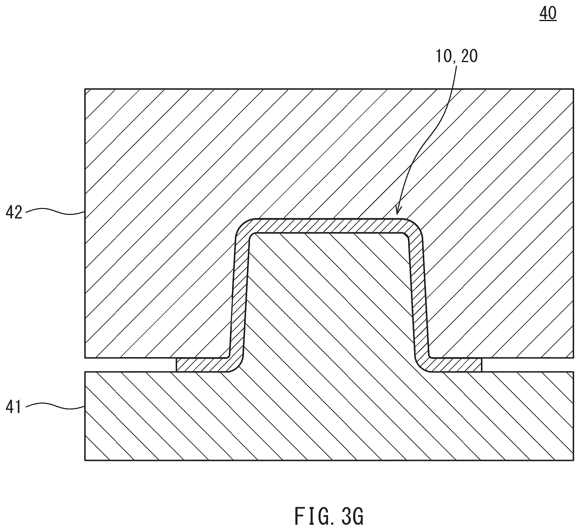

With reference to FIG. 3G, after the blank 20 is placed between the punch 41 and the die 42, the die 42 comes relatively closer to the punch 41. The blank 20 is sandwiched (pressed) between the punch 41 and the die 42 and formed into a shape conforming to the shaping surfaces of the punch 41 and the die 42. The blank 20 is kept being sandwiched between the punch 41 and the die 42. The blank 20 is made to dissipate heat (rapid cooling) in the press tooling 40, and thereby the microstructure thereof is transformed into martensite. In this way, the structural member 10 can be produced from the blank 20.

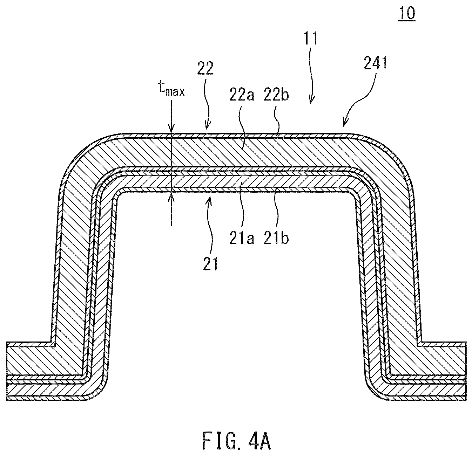

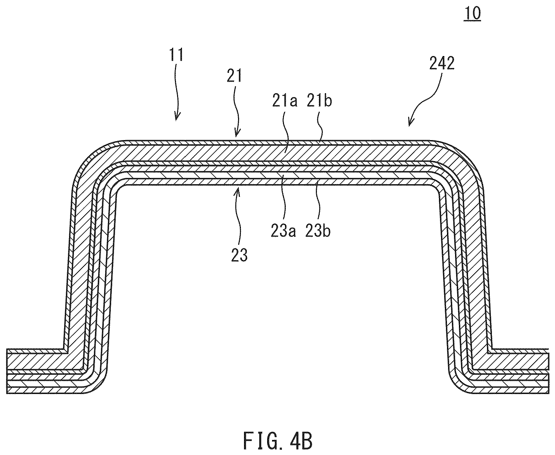

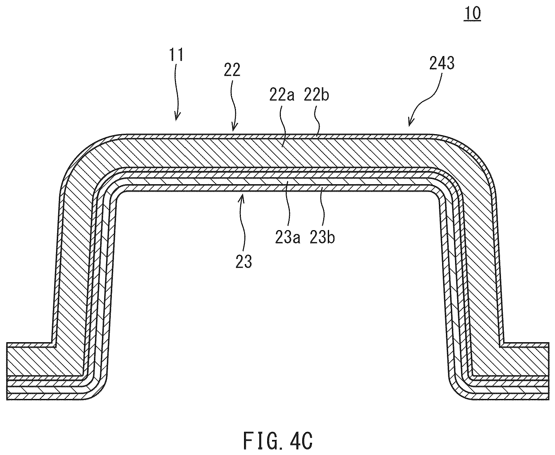

FIGS. 4A to 4C are cross-sectional views of the structural member 10 after hot stamping. FIG. 4A shows a cross section of the structural member 10 at the position of the overlap part 241 having the largest sheet thickness tₘₐₓ. FIGS. 4B and 4C show cross sections of the structural member 10 at the positions of the other overlap parts 242 and 243.

With reference to FIG. 4A, also in the structural member 10 after the hot stamping, the steel sheet 21 is a plated steel sheet having the aluminum-based plating layers 21b on both surfaces of the base steel sheet 21a. Similarly, the steel sheet 22 is also a plated steel sheet having the aluminum-based plating layer 22b on both surfaces of the base steel sheet 22a. With reference to FIGS. 4B and 4C, in the structural member 10 after the hot stamping, the steel sheet 23 is a plated steel sheet having the aluminum-based plating layers 23b on both surfaces of the base steel sheet 23a. However, the aluminum-based plating layers 21b, 22b and 23b in the structural member 10 are more alloyed with iron through the heating step than those in the blank 20 (FIGS. 3B to 3D).

With reference to FIGS. 4A to 4C, thicknesses K1 and K2 of the aluminum-based plating layers 21b and 22b of the steel sheets 21 and 22 that form the overlap part 241 having the largest thickness are each smaller than a thickness K3 of the aluminum-based plating layer 23b of the other steel sheet 23. In the steel sheet 21, the thickness K1 is a mean thickness of the aluminum-based plating layer 21b on both surfaces of the base steel sheet 21a. In the steel sheet 22, the thickness K2 is a mean thickness of the aluminum-based plating layer 22b on both surfaces of the base steel sheet 22a. In the steel sheet 23, the thickness K3 is a mean thickness of the aluminum-based plating layer 23b on both surfaces of the base steel sheet 23a. The difference between the thickness K1 of the aluminum-based plating layer 21b of the steel sheet 21 and the thickness K3 of the aluminum-based plating layer 23b of the steel sheet 23: K3-K1 is 7 (µm) or more, for example. K3-K1 may be 33 (µm) or less. Similarly, the difference between the thickness K2 of the aluminum-based plating layer 22b of the steel sheet 22 and the thickness K3 of the aluminum-based plating layer 23b of the steel sheet 23: K3-K2 is 7 (µm) or more, for example. K3-K2 may be 33 (µm) or less. The thickness K1 of the aluminum-based plating layer 21b of the steel sheet 21 may be equal to or different from the thickness K2 of the aluminum-based plating layer 22b of the steel sheet 22.

The thicknesses K1, K2 and K3 of the aluminum-based plating layers 21b, 22b and 23b of the structural member 10 can be measured as follows. That is, an automobile body part is disassembled to obtain the annular structural member 10, and an analysis specimen is obtained from the structural member 10 by laser cutting, for example. For example, an analysis specimen is obtained from each of the multiple steel sheets included in the structural member 10. The analysis specimen is taken from a center part or a vicinity thereof of the top plate of each of the steel sheets having an open cross section. For the test specimen taken from each of the multiple steel sheets, the cut surface of the aluminum-based plating layer is etched with nital and then observed with an optical microscope (area: 100 µm × 100 µm), the thickness of the plating layer is measured in three visual fields, and a mean value of the thicknesses of the plating layer measured in the three visual fields can be regarded as the plating thickness. In the outermost layer of the structural member 10, there is often an electrodeposition film or the like, for example. In such a case, the plating layer that exists under the electrodeposition film layer and on the base steel sheet is observed.

With reference to FIG. 4A, in the structural member 10, the overlap part 241 having the largest sheet thickness tₘₐₓ is the juncture between the adjacent two steel sheets 21 and 22. Provided that a maximum value and a minimum value of the Vickers hardness of the steel sheet on the front surface side of the member main body 11 among the steel sheets 21 and 22 forming the overlap part 241 are HVₘₐₓ and HVₘᵢₙ, respectively, HVₘₐₓ-HVₘᵢₙ is 30% or less of HVₘₐₓ. In the production method according to this embodiment, after the steel sheets 21 and 22 having a relatively thinner plating are joined to each other to form the overlap part 241, the steel sheets 21 and 22 are subjected to hot stamping. In the overlap part 241 after the hot stamping, the maximum value HVₘₐₓ and the minimum value HVₘᵢₙ of the Vickers hardness of at least the steel sheet disposed on the front surface side of the member main body 11 among the steel sheets 21 and 22 satisfy a relation that HVₘₐₓ-HVₘᵢₙ ≤ HVₘₐₓ × 30%. In this embodiment, the steel sheet 22, not the steel sheet 21, is disposed on the front surface side (outer side) of the member main body 11. However, the steel sheet 21, rather than the steel sheet 22, may be disposed on the front surface side (outer side) of the member main body 11.

The maximum value HVₘₐₓ and the minimum value HVₘᵢₙ of the Vickers hardness of the overlap part 241 can be measured as follows. First, a test specimen is taken from the structural member 10 by laser cutting, the test specimen including a cut surface of the steel sheet located on the front surface side of the member main body 11 among the steel sheets 21 and 22 forming the overlap part 241. According to JIS Z 2244: 2020, the cut surface of the steel sheet (base steel sheet) is adjusted as a test surface, and the Vickers hardness test is performed for thirty arbitrary points in the test surface that are distant from each other by the total sheet thickness of the overlap part 241 or more under conditions that the test force is 10 kgf (98.07 N) and the retention time of the test force is 10 s. Among the thirty Vickers hardnesses (HV) obtained in this way, the maximum Vickers hardness can be used as HVₘₐₓ, and the minimum Vickers hardness can be used as HVₘᵢₙ.

With reference to FIG. 4B, in the structural member 10, the overlap part 242 is the juncture between the adjacent two steel sheets 21 and 23. With reference to FIG. 4C, the overlap part 243 is the juncture between the adjacent two steel sheets 22 and 23. As with the overlap part 241 having the largest thickness, provided that in each of the overlap parts 242 and 243, the maximum value and the minimum value of the Vickers hardness are HVₘₐₓ and HVₘᵢₙ, respectively, HVₘₐₓ-HVₘᵢₙ is 30% or less of HVₘₐₓ, for example. In the production method according to this embodiment, after the overlap part 242 is formed, the steel sheets 21 and 23 are subjected to hot stamping, and after the overlap part 243 is formed, the steel sheets 22 and 23 are subjected to hot stamping. In the overlap parts 242 and 243 after the hot stamping, the maximum value HVₘₐₓ and the minimum value HVₘᵢₙ of the Vickers hardness satisfy a relation that HVₘₐₓ-HVₘᵢₙ ≤ HVₘₐₓ × 30%.

The maximum value HVₘₐₓ and the minimum value HVₘᵢₙ of the Vickers hardness of the overlap part 242 is measured on the steel sheet located on the front surface side of the member main body 11 among the steel sheets 21 and 23 in the overlap part 242. The maximum value HVₘₐₓ and the minimum value HVₘᵢₙ of the Vickers hardness of the overlap part 243 is measured on the steel sheet located on the front surface side of the member main body 11 among the steel sheets 22 and 23 in the overlap part 243. The maximum value HVₘₐₓ and the minimum value HVₘᵢₙ of the Vickers hardness of the overlap parts 242 and 243 can be measured in the same manner as the overlap part 241.

After the shaping step (hot stamping), the steel sheets 21, 22 and 23 can have a tensile strength of 0.5 GPa or more, for example, and preferably have a tensile strength of 1.0 GPa or more. At least one of the steel sheets 21, 22 and 23 may have a tensile strength of 1.5 GPa or more after the shaping step. The tensile strength of each of the steel sheets 21, 22 and 23 may be the same as or different from the tensile strengths of the other steel sheets.

### [Effects]

When the blank 20 is heated for hot stamping, in the steel sheets 21, 22 and 23, iron is diffused from the base steel sheets 21a, 22a and 23a into the aluminum-based plating layers 21b, 22b and 23b to form a diffusion layer. The diffusion layer increases in thickness as the heating time of the blank 20 increases, and the corrosion resistance or weldability owing to the aluminum-based plating layers 21b, 22b and 23b of the steel sheets 21, 22 and 23 may deteriorate. In order to ensure the corrosion resistance and the weldability of the steel sheets 21, 22 and 23, the thickness of the diffusion layer is preferably kept to a predetermined value or less. For example, when the steel sheets 21, 22 and 23 are heavy-coating aluminum-plated steel sheets having a base weight: approximately 50 to 80 g/m², the thickness of the diffusion layer is preferably 15 µm or less. Furthermore, when the steel sheets 21, 22 and 23 are light-coating aluminum-plated steel sheets having a base weight: approximately 40 to 50 g/m², for example, the thickness of the diffusion layer is preferably 10 µm or less. With the blank 20 according to this embodiment, the deposition amounts W1 and W2 of the aluminum-based plating layers 21b and 22b on the base steel sheets 21a and 22a of the steel sheets 21 and 22 forming the overlap part 241 having the largest sheet thickness tₘₐₓ are less than the deposition amount W3 of the aluminum-based plating layer 23b on the base steel sheet 21a of the other steel sheet 23. The deposition amounts W1 and W2 are 60 g/m² or less. As a result, when the blank 20 is heated for hot stamping, the heating rate of the overlap part 241 can be increased, and the heating time of the overlap part 241 can be reduced. Specifically, since the aluminum-based plating layers 21b and 22b in the surface layers of the steel sheets 21 and 22 are as thin as 60 g/m² or less in terms of deposition amount, when the blank 20 is heated, alloying of the aluminum-based plating layers 21b and 22b with iron contained in the base steel sheets 21a and 22a quickly proceeds to the surfaces of the steel sheets 21 and 22, and both surfaces of the steel sheets 21 and 22 including the overlap part 241 relatively quickly changes color to black or a color close to black. Therefore, the heating of the overlap part 241 can be accelerated, and the heating time of the overlap part 241 can be reduced. Therefore, the heating of the blank 20 can be ended before the alloying of the aluminum-based plating layers 21b, 22b and 23b of the steel sheets 21, 22 and 23 excessively proceed and the diffusion layer grows over the predetermined thickness. As a result, the strength of the overlap part 241 having the largest sheet thickness tₘₐₓ can be ensured by the hot stamping, and the corrosion resistance (rust resistance) of the steel sheets 21, 22 and 23 can be ensured. In addition, by keeping the thickness of the diffusion layer small, the weldability of the steel sheets 21, 22 and 23 is likely to be ensured.

With the blank 20 according to this embodiment, as described above, the heating rate of the overlap part 241 having the largest sheet thickness tₘₐₓ can be increased. Therefore, the whole of the blank 20 can be heated to a temperature required for hot stamping before the alloying of the aluminum-based plating layers 21b, 22b and 23b of the steel sheets 21, 22 and 23 excessively proceeds, and a process window of the heating condition in the production of the structural member 10 can be ensured. Therefore, the structural member 10 that combines the strength of the overlap part 241 having the largest sheet thickness tₘₐₓ and the rust resistance function of the steel sheets 21, 22 and 23 can be produced. In addition, by increasing the heating rate of the overlap part 241, the heating time of the blank 20 can be reduced, and therefore, the productivity of the structural member 10 can be improved. In addition, since the heating time of the blank 20 is reduced, the energy consumption in the production of the structural member 10 can be reduced, and the emissions of the greenhouse effect gas during heating can be reduced.

In this embodiment, the deposition amount W3 of the aluminum-based plating layer 23b in the steel sheet 23 is more than the deposition amounts in the steel sheets 21 and 22 forming the thickest overlap part 241. That is, the steel sheet 23 has a higher rust resistance performance than the steel sheets 21 and 22. The steel sheet 23 is typically disposed in a part of the structural member 10 that requires a relatively high rust resistance performance. In this way, the rust resistance performance required for the annular structural member 10 can be ensured.

In this embodiment, the deposition amounts W1 and W2 of the aluminum-based plating layers 21b and 22b of the steel sheets 21 and 22 may be the same or different. However, from the viewpoint of uniformly heating the blank 20, the deposition amount W1 of the aluminum-based plating layer 21b of the steel sheets 21 is preferably substantially equal to the deposition amount W2 of the aluminum-based plating layer 22b of the steel sheet 22.

In this embodiment, in the heating step, the steel sheet 23 having the smallest sheet thickness tₘᵢₙ in the blank 20 first reaches a temperature in the austenite zone, and then the other parts reach the temperature in the austenite zone in ascending order of the sheet thickness. The overlap part 241 having the largest sheet thickness tₘₐₓ is the last part that reaches the temperature in the austenite zone. When the steel sheets 21, 22 and 23 included in the blank 20 have different sheet thicknesses as in this embodiment, if the smallest sheet thickness tₘᵢₙ and the largest sheet thickness tₘₐₓ are excessively different, the heating of the overlap part 241 having the largest sheet thickness tₘₐₓ is substantially delayed compared with the steel sheet 23 having the sheet thickness tₘᵢₙ, and the process window of the heating condition may be unable to be ensured. In view of this, the ratio of the largest sheet thickness tₘₐₓ to the smallest sheet thickness tₘᵢₙ: tₘₐₓ/tₘᵢₙ is preferably 3.0 or less. In this way, even if the steel sheets 21, 22 and 23 have different sheet thicknesses, the overlap part 241 can be heated enough for the phase transformation to austenite to complete, before alloying of the aluminum-based plating layer 23b of the thinnest steel sheet 23 proceeds and the corrosion resistance thereof is lost. Therefore, a process window is likely to be ensured in production of the structural member 10.

### <Second Embodiment>

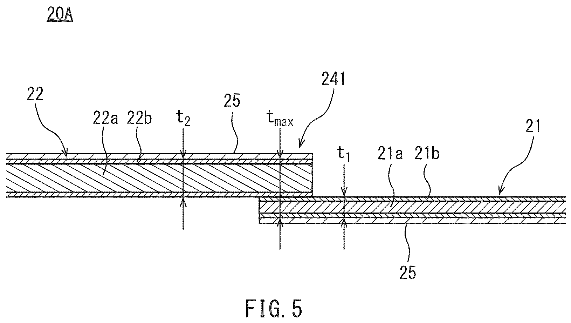

FIG. 5 is a cross-sectional view of a blank 20A according to a second embodiment. FIG. 5 shows an overlap part 241 formed by steel sheets 21 and 22. The blank 20A according to this embodiment differs from the blank 20 according to the first embodiment in that the overlap part 241 having the largest sheet thickness tₘₐₓ is provided with a film 25.

The surface of each of the steel sheets 21 and 22 that is located on the outer side of the overlap part 241 is coated with the film 25. With the steel sheet 21, the whole of the surface opposite to the other steel sheet 22 is coated with the film 25. With the steel sheet 22, the whole of the surface opposite to the other steel sheet 21 is coated with the film 25. That is, the surfaces of the steel sheets 21 and 22 that form the front and back surfaces of the overlap part 241 are each coated with the film 25.

The film 25 is a film that is substantially black in color. For example, when the lightness L* value of the surface of the film 25 (CIE 1976 lightness index L* defined in JIS Z8781-4: 2013) is 60 or less, the film 25 can be determined to be black in color. The film 25 may be a surface-treated carbon-based film (a film containing carbon (C)).

As the film 25, for example, a surface-treated film described in International Application Publication No. WO2022/215229 can be used. Specifically, the film 25 may contain carbon black, for example. The film 25 may further contain a metal oxide. The metal oxide is one or more oxides selected from among the group consisting of Zr oxide, Zn oxide and Ti oxide, for example. The film 25 may contain silica.

The film 25 may contain graphite, soot or the like, instead of or in addition to carbon black. Alternatively, in order to increase the emissivity of the steel sheet 21, the film 25 may contain an acicular compound having a hexagonal crystal structure having an aspect ratio of 4 or more and 50 or less, for example. The compound having a hexagonal crystal structure is typically graphite (C). However, the compound may be lanthanum silicate, magnesium diboride, beryllium oxide (beryllia), zinc oxide, β-quartz, millerite (NiS), wurtzite (ZnS) or the like.

The thickness of the film 25 is 0.5 µm or more and 5.0 µm or less, for example. The thickness of the film 25 is preferably 1.0 µm or more and 3.0 µm or less. The thickness of the film 25 is small enough to be negligible compared with the sheet thickness of each of the steel sheets 21, 22 and 23. Therefore, the measured sheet thickness including the thickness of the film 25 can be treated as the sheet thickness tₘₐₓ of the overlap part 241.

In this embodiment, since the surface of each of the steel sheets 21 and 22 that is located on the outer side of the overlap part 241 is provided with the film 25 that is substantially black in color, the emissivity of both outer surfaces of the overlap part 241 can be increased. For example, in each of the steel sheets 21 and 22, the surface coated with the film 25 has an emissivity of 60% or more at a measurement temperature of 25°C and a wavelength of 8.0 µm. As a result of being provided with the film 25, the surfaces of the steel sheets 21 and 22 that are located on the outer side of the overlap part 241 have an emissivity of more than 5%, preferably more than 10%, or more preferably more than 20% than the emissivity of the other steel sheet that is not provided with the film 25 at a temperature of 25°C and a wavelength of 8.0 µm, for example. By increasing the emissivity of the overlap part 241 in advance in this way, the heating of the overlap part 241 can be accelerated when the blank 20A is heated for hot stamping. Therefore, even when the overlap part 241 having the largest sheet thickness tₘₐₓ and the steel sheet 23 having the smallest sheet thickness tₘᵢₙ (FIGS. 3C and 3D) in the blank 20A have more significantly different sheet thicknesses, a process window of the heating condition is likely to be ensured.

With the blank 20 according to this embodiment, the ratio between the largest sheet thickness tₘₐₓ and the smallest sheet thickness tₘᵢₙ: tₘₐₓ/tₘᵢₙ is 2.5 or more, for example. tₘₐₓ/tₘᵢₙ may be more than 3.0. In this embodiment, since the emissivity of the overlap part 241 is increased in advance by the film 25 that is substantially black in color, the heating of the overlap part 241 is more accelerated when the blank 20A is heated for hot stamping. Therefore, even when tₘₐₓ/tₘᵢₙ is high, for example, even when tₘₐₓ/tₘᵢₙ is more than 3.0, the heating of the overlap part 241, which is the thickest, is likely to be ended before alloying of the aluminum-based plating layer 23b of the thinnest steel sheet 23 (FIGS. 3C and 3D) excessively proceeds, and a process window of the heating condition can be ensured. From the viewpoint of ensuring a process window of the heating condition with higher reliability, the largest sheet thickness tₘₐₓ and the smallest sheet thickness tₘᵢₙ of the blank 20A preferably satisfy a relation that tₘₐₓ/tₘᵢₙ ≤ 4.0.

In the example in FIG. 5, the surface of each of the steel sheets 21 and 22 that is located on the outer side of the overlap part 241 is coated with the film 25 that is substantially black in color. However, it is also possible that the surface of one of the steel sheets 21 and 22 that is located on the outer side of the overlap part 241 is coated with the film 25, and the surface of the other of the steel sheets 21 and 22 that is located on the outer side of the overlap part 241 is not coated with the film 25. Furthermore, in the example shown in FIG. 5, the surface of each of the steel sheets 21 and 22 that is located on the inner side of the overlap part 241 is not coated with the film 25 that is substantially black in color. However, the surface of each of the steel sheets 21 and 22 that is located on the inner side of the overlap part 241 may also be coated with the film 25. However, from the viewpoint of making heating of the blank 20A uniform for hot stamping, it is preferable that the surface of each of the steel sheets 21 and 22 that is located on the outer side of the overlap part 241 is coated with the film 25, and the surface located on the inner side of the overlap part 241 is not coated with the film 25.

Although embodiments of the present disclosure have been described above, the present disclosure is not limited to the embodiments described above, and various modifications can be made without departing from the spirit of the present disclosure.

With the blanks 20 and 20A according to the embodiments described above, in both the steel sheets 21 and 22 forming the overlap part 241 having the largest sheet thickness tₘₐₓ, the deposition amounts W1 and W2 of the aluminum-based plating layers 21b and 22b are 60 g/m² or less and are less than the deposition amount W3 of the aluminum-based plating layer 23b of the other steel sheet 23. However, in the blanks 20 and 20A, the deposition amount of the aluminum-based plating layer of only at least one of the steel sheets 21 and 22 has to be 60 g/m² or less and less than the deposition amount W3 of the aluminum-based plating layer 23b of the other steel sheet 23. For example, when the deposition amount W1 of the aluminum-based plating layer 21b of the steel sheet 21 is 60 g/m² or less, the deposition amount W2 of the aluminum-based plating layer 22b of the steel sheet 22 may be more than 60 g/m². In that case, the deposition amount W2 may be equal to or more than the deposition amount W3 of the aluminum-based plating layer 23b of the steel sheet 23. Similarly, when the deposition amount W2 of the aluminum-based plating layer 22b of the steel sheet 22 is 60 g/m² or less, the deposition amount W1 of the aluminum-based plating layer 21b of the steel sheet 21 may be more than 60 g/m². In that case, the deposition amount W1 may be equal to or more than the deposition amount W3 of the aluminum-based plating layer 23b of the steel sheet 23.

With the structural members 10 according to the embodiments described above, in both the steel sheets 21 and 22 forming the overlap part 241 having the largest sheet thickness tₘₐₓ, the thicknesses K1 and K2 of the aluminum-based plating layers 21b and 22b are less than the thickness K3 of the aluminum-based plating layer 23b of the other steel sheet 23. However, in the structural members 10, the thickness of the aluminum-based plating layer of only at least one of the steel sheets 21 and 22 has to be less than the thickness K3 of the aluminum-based plating layer 23b of the other steel sheet 23. For example, when the thickness K1 of the aluminum-based plating layer 21b of the steel sheet 21 is less than the thickness K3 of the aluminum-based plating layer 23b of the steel sheet 23, the thickness K2 of the aluminum-based plating layer 22b of the steel sheet 22 may be equal to or more than the thickness K3 of the aluminum-based plating layer 23b of the steel sheet 23. Similarly, when the thickness K2 of the aluminum-based plating layer 22b of the steel sheet 22 is less than the thickness K3 of the aluminum-based plating layer 23b of the steel sheet 23, the thickness K1 of the aluminum-based plating layer 21b of the steel sheet 21 may be equal to or more than the thickness K3 of the aluminum-based plating layer 23b of the steel sheet 23.

In the embodiments described above, both the steel sheets 21 and 22 forming the overlap part 241 having the largest sheet thickness tₘₐₓ are aluminum-plated steel sheets. That is, the steel sheets 21 and 22 have the base steel sheets 21a and 22a and the aluminum-based plating layers 21b and 22b, respectively. However, only at least one of the steel sheets 21 and 22 has to be a plated steel sheet having a base steel sheet and an aluminum-based plating layer. In other words, any one of the steel sheets 21 and 22 need not be an aluminum-plated steel sheet. When one of the steel sheets 21 and 22 is an aluminum-plated steel sheet, the other of the steel sheets 21 and 22 may be a zinc-plated steel sheet, for example.

With the blanks 20 and 20A according to the embodiments described above, end parts of the steel sheets 21 and 22 are lap-joined to form the overlap part 241. Similarly, end parts of the steel sheets 21 and 23 are lap-joined to form the overlap part 242. Furthermore, end parts of the steel sheets 22 and 23 are lap-joined to form the overlap part 243. However, the blanks 20 and 20A have only to include at least one overlap part. That is, the steel sheet 23 need not be lap-joined to the steel sheets 21 and 22. The steel sheet 23 may be butt-joined to one or both of the steel sheets 21 and 22.

In the embodiments described above, the steel sheets 21, 22 and 23 included in the blank 20 or 20A may be single-layer or multilayer. That is, each of the steel sheets 21, 22 and 23 may be a single steel sheet or a sheet material formed by multiple steel sheets overlaid on one another.

In the embodiments described above, the blanks 20 and 20A each include three steel sheets 21, 22 and 23. However, the number of steel sheets included in the blanks 20 and 20A is not limited to this. The blank 20 or 20A may include four or more steel sheets. When the blank 20 or 20A includes four or more steel sheets, the steel sheets other than the steel sheets 21, 22 and 23 may be aluminum-plated steel sheets, other plated steel sheets or steel sheets with no plating layers (bare materials). When the steel sheets other than the steel sheets 21, 22 and 23 are plated steel sheets, the deposition amount of the plating layer in the steel sheets may be equal to or different from any of the deposition amounts W1, W2 and W3 of the aluminum-based plating layers 21b, 22b and 23b of the steel sheets 21, 22 and 23.

With the blanks 20 and 20A according to the embodiments described above, the steel sheet 23 that does not form the overlap part 241 having the largest sheet thickness tₘₐₓ has the smallest sheet thickness tₘᵢₙ. However, one or both of the steel sheets 21 and 22 that form the overlap part 241 having the largest sheet thickness tₘₐₓ may be steel sheets that have the smallest sheet thickness tₘᵢₙ in the annular blanks 20 and 20A. Alternatively, when the blank 20 or 20A includes four or more steel sheets, a steel sheet other than the steel sheets 21, 22 and 23 may have the smallest sheet thickness tₘᵢₙ.

In the embodiments described above, the blanks 20 and 20A have only one overlap part 241 having the largest sheet thickness tₘₐₓ. However, the blank 20 or 20A may have multiple overlap parts having the largest sheet thickness tₘₐₓ. In that case, for all the overlap parts having the largest sheet thickness tₘₐₓ, the deposition amount of the aluminum-based plating layer of at least one of the two steel sheets forming the overlap part is preferably 60 g/m² or less.

With the blanks 20 and 20A according to the embodiments described above, the multiple steel sheets 21, 22 and 23 have different sheet thicknesses. However, among the three or more steel sheets included in each of the blanks 20 and 20A, two or more steel sheets may have the same sheet thickness, or all the steel sheets may have the same sheet thickness. When all the steel sheets included in the blanks 20 and 20A have the same sheet thickness, tₘₐₓ/tₘᵢₙ is 2.0.

In the embodiments described above, the press tooling 40 used for hot stamping of the blank 20 includes the punch 41 and the die 42. However, the configuration of the press tooling 40 is not limited to the example described in the above embodiments. The press tooling 40 may further include a pad or a blank holder, for example.

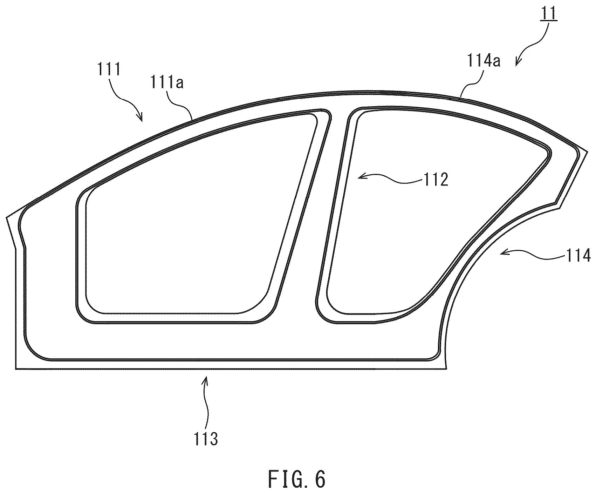

In the embodiments described above, the main body 11 of the structural member 10 includes the front pillar 111, the center pillar 112 and the rocker 113. However, the member main body 11 may further include another component. For example, as shown in FIG. 6, the member main body 11 may further include a rear pillar 114. The rear pillar 114 may include a curved part 114a that is convexly curved outward of the member main body 11 in plan view of the structural member 10. In the example in FIG. 6, the curved part 114a is disposed in an upper part (upper rear pillar part) of the rear pillar 114. The structural members 10 according to the embodiments described above are door ring parts (single door ring parts) having a single ring shape. On the other hand, the structural member shown in FIG. 6 is a door ring part (double door ring part) having a double ring shape. When producing the double door ring part, the blank used as the starting material also has the double ring shape.

In the structural member 10 according to the first embodiment described above, the steel sheet 21 having a relatively small deposition amount of the aluminum-based plating layer 21b is arranged in the curved part 111a of the front pillar 111. However, the steel sheet 22 that forms the overlap part 241 with the steel sheet 21 may be arranged in the curved part 111a. In the case of the structural member shown in FIG. 6, at least one of the steel sheets 21 and 22 may be arranged in the curved part 114a of the rear pillar 114. In the door ring part, the curved parts 111a and 114a are parts that are required to have relatively low rust resistance performance. The thin-plated steel sheets 21 and/or 22 are inferior in rust resistance performance to the thick-plated steel sheet and therefore are preferably arranged in the curved part 111a or 114a that is not required to have high rust resistance performance. However, the positions of the steel sheets 21 and 22 are not limited to this. The steel sheets 21 and 22 may be arranged in a lower part (lower front pillar part) of the front pillar 111, a lower part (lower front pillar part) of the rear pillar 114 or the center pillar 112.

### EXAMPLES

In the following, the present disclosure will be described in more detail with reference to examples. However, the present disclosure is not limited to the examples described below.

### [First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 1 shows the steel sheets used in this analysis.

### [Table 1]

**TABLE 1**

| Symbol | Type of starting material | Base material | Plating amount on one side, g/m² |
|---|---|---|---|
| A120 | Al-Si 1.5G HS | Steel sheet for 1.5 GPa class hot stamping | 120 |
| A80 | Al-Si 1.5G HS | Steel sheet for 1.5 GPa class hot stamping | 80 |
| A80-1 | Black film (one side) Al-Si 1.5G HS | Steel sheet for 1.5 GPa class hot stamping | 80 |
| A60 | Al-Si 1.5G HS | Steel sheet for 1.5 GPa class hot stamping | 60 |
| A50 | Al-Si 1.5G HS | Steel sheet for 1.5 GPa class hot stamping | 50 |
| A40 | Al-Si 1.5G HS | Steel sheet for 1.5 GPa class hot stamping | 40 |
| A40-1 | Black film (one side) Al-Si 1.5G HS | Steel sheet for 1.5 GPa class hot stamping | 40 |
| A60-G | GA 1.5G HS | Steel sheet for 1.5 GPa class hot stamping | 60 |
| B120 | Al-Si 2.0G HS | Steel sheet for 2.0 GPa class hot stamping | 120 |
| B80 | Al-Si 2.0G HS | Steel sheet for 2.0 GPa class hot stamping | 80 |
| B60 | Al-Si 2.0G HS | Steel sheet for 2.0 GPa class hot stamping | 60 |
| B40 | Al-Si 2.0G HS | Steel sheet for 2.0 GPa class hot stamping | 40 |
| B40-1 | Black film (one side) Al-Si 2.0G HS | Steel sheet for 2.0 GPa class hot stamping | 40 |
| B60-G | GA 2.0G HS | Steel sheet for 2.0 GPa class hot stamping | 60 |
| C80 | Al-Si 2.5G HS | Steel sheet for 2.5 GPa class hot stamping | 80 |
| C40 | Al-Si 2.5G HS | Steel sheet for 2.5 GPa class hot stamping | 40 |
| C40-1 | Black film (one side) Al-Si 2.5G HS | Steel sheet for 2.5 GPa class hot stamping | 40 |
| D80 | Al-Si 1.0G HS | Steel sheet for 1.0 GPa class hot stamping | 80 |
| D80-2 | Black film (both sides) Al-Si 1.0G HS | Steel sheet for 1.0 GPa class hot stamping | 80 |
| D40 | Al-Si 1.0G HS | Steel sheet for 1.0 GPa class hot stamping | 40 |
| D40-1 | Black film (one side) Al-Si 1.0G HS | Steel sheet for 1.0 GPa class hot stamping | 40 |
| E80 | Al-Si 0.5G HS | Steel sheet for 0.5 GPa class hot stamping | 80 |
| E40 | Al-Si 0.5G HS | Steel sheet for 0.5 GPa class hot stamping | 40 |
| E40-1 | Black film (one side) Al-Si 0.5G HS | Steel sheet for 0.5 GPa class hot stamping | 40 |

In Table 1, the "type of starting material" shows type of plating, tensile strength and use (hot stamping) in this order. However, for cases where a black film containing carbon (C) is provided on a plating layer, a term "black film (one side)" or "black film (both sides)" is shown before type of starting material. The "black film (one side)" means that the whole of one surface of the plated steel sheet is coated with a black film. The "black film (both sides)" means that the whole of both surfaces of the plated steel sheet is coated with a black film. Although Table 1 shows values of the deposition amount of the plating layer per side, the deposition amount of the plating layer is the same on both surfaces of the starting material in this analysis.

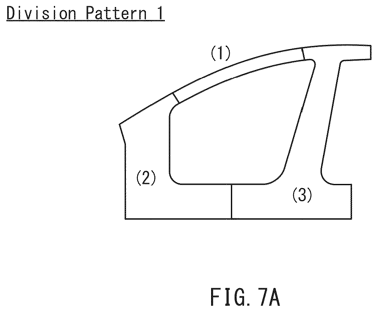

FIGS. 7A to 7G show division patterns of the structural member. FIGS. 7A to 7G show the number of steel sheets (starting materials) included in the structural members that are single door ring parts and the positions of the junctures between the steel sheets in the structural members. In FIGS. 7A to 7G, each steel sheet is denoted by a numeral in parentheses.

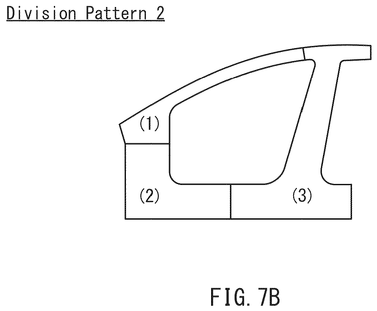

Table 2 shows analysis conditions and results for division patterns 1 and 2 shown in FIGS. 7A and 7B. In FIGS. 7A and 7B, the structural member is formed of three starting materials (1) to (3). The starting materials (1) to (3) are each lap-joined to adjacent starting materials.

### [Table 2]

**TABLE 2**

| Symbol | Division pattern | Starting material (1) | | Starting material 2) | | Starting material (3) | | Smallest sheet thickness tₘᵢₙ, mm | Largest sheet thickness tₘₐₓ, mm | Time required to reach 910°C, s | Heating completion time, s | PW, s |
|---|---|---|---|---|---|---|---|---|---|---|---|---|
| | | Type of starting material | Sheet thickness, mm | Type of starting material | Sheet thickness, mm | Type of starting material | Sheet thickness, mm | | | | | |
| Example 1 | 1 | B40 | 1.4 | D40 | 1.4 | B80 | 1.2 | 1.2 | 2.8 | 149.5 | 301.5 | 93.0 |
| Example 2 | 1 | B80 | 1.2 | D40 | 1.3 | A40 | 1.6 | 1.2 | 2.9 | 149.5 | 312.3 | 82.2 |
| Example 3 | 2 | A40 | 1.6 | D80 | 1.2 | A40 | 1.8 | 1.2 | 3.4 | 149.5 | 366.0 | 28.5 |
| Comparative example 1 | 1 | B80 | 1.4 | D80 | 1.4 | B80 | 1.2 | 1.2 | 2.8 | 149.5 | 349.5 | 45.0 |
| Comparative example 2 | 2 | A80 | 1.6 | D80 | 1.2 | A80 | 1.8 | 1.2 | 3.4 | 149.5 | 424.5 | -30.0 |

In Table 2, "time required to reach 910°C" means the time required for the starting material having the smallest sheet thickness tₘᵢₙ among the starting materials included in the blank to reach 910°C (A_{c3} point or higher) after the start of heating of the blank. "Heating completion time" means the time required for a part that is the slowest to rise in temperature in the blank to reach 910°C so that hot stamping can be performed after the start of heating of the blank. "Process window (PW)" means a value obtained by subtracting the heating completion time from the sum of the allowable heating time (245 seconds) after the starting material having the smallest sheet thickness tₘᵢₙ reaches 910°C and the time required to reach 910°C. The greater this value, the wider the process window of the heating condition in hot stamping of the structural member.

With reference to Table 2 and FIG. 7A, in Example 1, the starting material (1) and the starting material (2) form an overlap part having the largest sheet thickness tₘₐₓ = 2.8 mm. In Example 1, the deposition amount of the aluminum-based plating layer of both the starting materials (1) and (2) was 40 g/m² and was less than the deposition amount of the aluminum-based plating layer of the other starting material (3). In Comparative example 1, in which the combination of the type of the starting material and the sheet thickness was the same as in Example 1, the deposition amount of the aluminum-based plating layer was the same, 80 g/m², for the starting materials (1) to (3). In Example 1, the overlap part, which was the thickest part, was a thin-plated part, so that heating of the overlap part was promoted, and the heating completion time of the blank was substantially reduced compared with Comparative example 1. As a result, in Example 1, the process window was enlarged by almost 50 seconds compared with Comparative example 1.

With reference to Table 2 and FIG. 7B, in Example 3, the starting material (1) and the starting material (3) form an overlap part having the largest sheet thickness tₘₐₓ = 3.4 mm. In Example 3, the deposition amount of the aluminum-based plating layer of both the starting materials (1) and (3) was 40 g/m² and was less than the deposition amount of the aluminum-based plating layer of the other starting material (2). In Comparative example 2, in which the combination of the type of the starting material and the sheet thickness was the same as in Example 3, the deposition amount of the aluminum-based plating layer was the same, 80 g/m², for the starting materials (1) to (3). In Example 3, the overlap part, which was the thickest part, was a thin-plated part, so that heating of the overlap part was promoted, and the heating completion time of the blank was substantially reduced compared with Comparative example 2. As a result, in Example 3, the process window was enlarged by 50 seconds or more compared with Comparative example 2.

In Example 2, the starting material (2) and the starting material (3) form an overlap part having the largest sheet thickness tₘₐₓ = 2.9 mm. In Example 2, the deposition amount of the aluminum-based plating layer of both the starting materials (2) and (3) was 40 g/m² and was less than the deposition amount of the aluminum-based plating layer of the other starting material (1). In Example 2, again, it was ascertained that a sufficient process window was ensured.

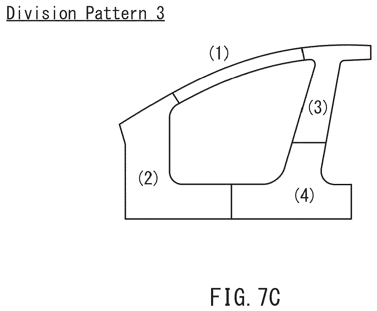

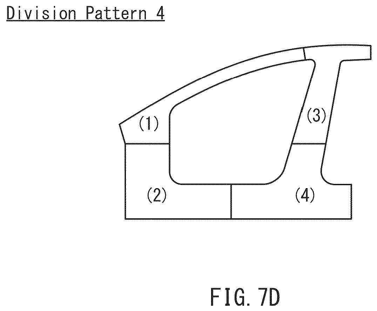

Table 3 shows analysis conditions and results for division patterns 3 and 4 shown in FIGS. 7C and 7D. In FIGS. 7C and 7D, the structural member is formed of four starting materials (1) to (4). The starting materials (1) to (4) are each lap-joined to adjacent starting materials.

### [Table 3]

**TABLE 3**

| Symbol | Division pattern | Starting material (1) | | Starting material (2) | | Starting material (3) | | Starting material (4) | | Smallest sheet thickness tₘᵢₙ, mm | Largest sheet thickness tₘₐₓ, mm | Time required to reach 910°C, s | Heating completion time, s | PW, s |
|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | | | | |
| Example 4 | 3 | C40 | 2.0 | A40 | 1.6 | A40 | 1.6 | A80 | 1.4 | 1.4 | 3.6 | 174.5 | 387.5 | 32.0 |
| Example 5 | 4 | B40 | 1.4 | B80 | 1.4 | B40 | 1.6 | C40-1 | 1.2 | 1.2 | 3.0 | 94.5 | 323.0 | 16.5 |
| Example 6 | 4 | B40 | 1.6 | A80 | 1.6 | A40 | 1.8 | A40 | 1.4 | 1.4 | 3.4 | 150.5 | 366.0 | 29.5 |
| Example 7 | 3 | B40 | 1.6 | D80 | 1.4 | B40 | 2.0 | D40 | 1.6 | 1.4 | 3.6 | 174.5 | 387.5 | 32.0 |
| Example 8 | 4 | A40 | 1.8 | C40 | 1.6 | B40 | 2.0 | A80 | 1.4 | 1.4 | 3.8 | 174.5 | 409.0 | 10.5 |
| Example 9 | 4 | A40 | 1.2 | B80 | 1.4 | B40 | 1.4 | D40 | 1.2 | 1.2 | 2.6 | 129.0 | 279.5 | 94.5 |
| Example 10 | 3 | C40 | 1.6 | A80 | 1.2 | C40 | 2.0 | E40 | 1.6 | 1.2 | 3.6 | 149.5 | 387.5 | 7.0 |
| Example 11 | 4 | A80 | 1.6 | A60-G | 1.6 | B40 | 2.0 | A40 | 1.6 | 1.6 | 3.6 | 171.5 | 387.5 | 29.0 |
| Comparative example 3 | 3 | C80 | 1.6 | A80 | 1.6 | B80 | 2.0 | A80 | 1.6 | 1.6 | 3.6 | 199.5 | 449.5 | -5.0 |
| Comparative example 4 | 4 | A80 | 1.8 | C80 | 1.6 | B80 | 2.0 | A80 | 1.4 | 1.4 | 3.8 | 174.5 | 474.5 | -55.0 |
| Comparative example 5 | 4 | B80 | 1.6 | A80 | 1.6 | A80 | 1.8 | A80 | 1.4 | 1.4 | 3.4 | 174.5 | 424.5 | -5.0 |
| Comparative example 6 | 3 | B80 | 1.6 | D80 | 1.4 | B80 | 2.0 | D80 | 1.6 | 1.4 | 3.6 | 174.5 | 449.5 | -30.0 |
| Comparative example 7 | 4 | A80 | 1.2 | B80 | 1.4 | B80 | 1.4 | D80-2 | 1.2 | 1.2 | 2.6 | 115.0 | 324.5 | 35.5 |

In Examples 4 to 11 shown in Table 3, as in Examples 1 to 3 (Table 2), the deposition amount of the aluminum-based plating layer in the starting materials forming the overlap part having the largest sheet thickness tₘₐₓ was 40 g/m² and was less than the deposition amount in another starting material. Therefore, in Examples 4 to 11, again, a process window of the heating condition was able to be ensured. As can be seen, the process window in each example was enlarged compared with a corresponding comparative example.

For example, in Example 8, the starting material (1) and the starting material (3) form an overlap part having the largest sheet thickness tₘₐₓ = 3.8 mm. In Example 8, the deposition amount of the aluminum-based plating layer of each of the starting materials (1) and (3) was 40 g/m² and was less than the deposition amount of the aluminum-based plating layer of the starting material (4) (Table 3 and FIG. 7D). On the other hand, in Comparative example 4, although the combination of the type of the starting material and the sheet thickness was the same as in Example 8, the deposition amount of the aluminum-based plating layer was the same, 80 g/m², for all the starting materials. In Example 8, heating the overlap part, which was a thin-plated part, was promoted, and the heating completion time of the blank was substantially reduced compared with Comparative example 4. In Example 8, the process window was enlarged by 60 or more seconds compared with Comparative example 4. In Comparative example 4, the process window of the heating condition was lost (negative).

For example, in Example 9, the starting material (3) and the starting material (4) form an overlap part having the largest sheet thickness tₘₐₓ = 2.6 mm. In Example 9, the deposition amount of the aluminum-based plating layer of each of the starting materials (3) and (4) was 40 g/m² and was less than the deposition amount of the aluminum-based plating layer of the starting material (2) (Table 3 and FIG. 7D). On the other hand, in Comparative example 7, although the combination of the type of the starting material and the sheet thickness was the same as in Example 9, the deposition amount of the aluminum-based plating layer was the same, 80 g/m², for all the starting materials. In Example 9, heating the overlap part, which was a thin-plated part, was promoted, and the heating completion time of the blank was substantially reduced compared with Comparative example 7. In Example 9, the process window was enlarged by almost 60 seconds compared with Comparative example 7. In Comparative example 7, both surfaces of the thinnest starting material (4) were provided with a black film, and although the time required to reach 910°C was a little more than 10 seconds earlier than in Example 9, the heating completion time of the blank was reduced by 45 seconds in the example 9 compared with Comparative example 7. Therefore, it can be said that the process window was enlarged compared with Comparative example 7 even if the difference in time required to reach 910°C was taken into account.

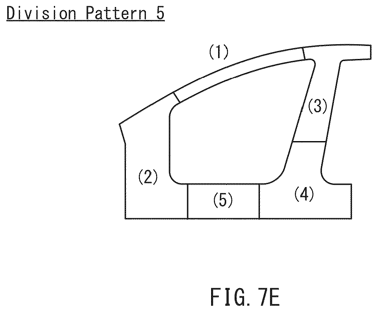

Table 4 shows analysis conditions and results for division patterns 5 to 7 shown in FIGS. 7E to 7G. In FIGS. 7E to 7G, the structural member is formed of five starting materials (1) to (5). The starting materials (1) to (5) are each lap-joined to adjacent starting materials.

### [Table 4]

**TABLE 4**

| Symbol | Division pattern | Starting material (1) | | Starting material (2) | | Starting material (3) | | Starting material (4) | | Starting material (5) | | Smallest sheet thickness tₘᵢₙ, mm | Largest sheet thickness tₘₐₓ, mm | Time required to reach 910°C, s | Heating completion time, s | PW, s |
|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 12 | 5 | A40 | 1.2 | A80 | 1.4 | C80 | 1.2 | A40 | 1.8 | A40 | 1.6 | 1.2 | 3.4 | 149.5 | 366.0 | 28.5 |
| Example 13 | 5 | A40-1 | 1.4 | B80 | 1.2 | C40 | 1.6 | D80 | 1.2 | B40-1 | 1.4 | 1.2 | 3.0 | 110.0 | 323.0 | 32.0 |
| Example 14 | 6 | A40 | 1.6 | C40 | 1.6 | A80 | 1.2 | B40 | 1.8 | D80 | 1.2 | 1.2 | 3.2 | 149.5 | 344.5 | 50.0 |
| Example 15 | 5 | C40-1 | 1.6 | B40 | 1.6 | B80 | 1.4 | A40 | 1.2 | A120 | 1.2 | 1.2 | 3.2 | 131.5 | 344.5 | 32.0 |
| Example 16 | 6 | B40 | 1.2 | B80 | 1.2 | A40 | 1.8 | D40 | 1.2 | B80 | 1.2 | 1.2 | 3.0 | 129.0 | 323.0 | 51.0 |
| Example 17 | 5 | B60-G | 1.4 | D80 | 1.2 | B40 | 1.6 | E40 | 1.0 | A40 | 1.2 | 1.0 | 3.0 | 107.0 | 323.0 | 29.0 |
| Example 18 | 5 | A50 | 1.2 | B80 | 1.6 | B40 | 2.0 | A50 | 1.2 | A80 | 1.4 | 1.2 | 3.2 | 129.0 | 352.1 | 21.9 |
| Example 19 | 5 | A60 | 1.2 | B80 | 1.6 | B40 | 2.0 | A60 | 1.2 | A80 | 1.4 | 1.2 | 3.2 | 129.0 | 363.0 | 11.0 |
| Example 20 | 5 | A60 | 1.2 | B80 | 1.4 | B60 | 1.8 | A80 | 1.2 | A80 | 1.4 | 1.2 | 3.0 | 129.0 | 362.0 | 12.0 |
| Example 21 | 5 | A80-1 | 1.2 | B80 | 1.6 | B60 | 2.0 | A80-1 | 1.2 | A80 | 1.4 | 1.2 | 3.2 | 129.0 | 333.0 | 41.0 |
| Comparative example 8 | 5 | A80 | 1.4 | A80 | 1.2 | C80 | 1.8 | A80 | 1.4 | A80 | 1.4 | 1.2 | 3.2 | 149.5 | 399.5 | -5.0 |
| Comparative example 9 | 6 | A80 | 1.6 | C80 | 1.6 | A80 | 1.2 | B80 | 1.8 | D80 | 1.2 | 1.2 | 3.2 | 149.5 | 399.5 | -5.0 |
| Comparative example 10 | 5 | C80 | 1.6 | B80 | 1.6 | B80 | 1.4 | A80 | 1.2 | A80 | 1.2 | 1.2 | 3.2 | 149.5 | 399.5 | -5.0 |
| Comparative example 11 | 6 | B80 | 1.2 | B80 | 1.2 | A80 | 1.8 | D80 | 1.2 | B80 | 1.2 | 1.2 | 3.0 | 149.5 | 374.5 | 20.0 |

In Examples 12 to 21 shown in Table 4, the deposition amount of the aluminum-based plating layer in at least one of the two starting materials forming the overlap part having the largest sheet thickness tₘₐₓ was 60 g/m² or less and was less than the deposition amount in another starting material. In Examples 12 to 21, again, a sufficient process window of the heating condition was able to be ensured. As can be seen, the process window in each example was enlarged compared with a corresponding comparative example.

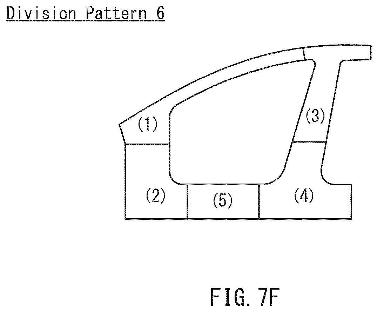

For example, in Example 14, the starting material (1) and the starting material (2) form an overlap part having the largest sheet thickness tₘₐₓ = 3.2 mm. In Example 14, the deposition amount of the aluminum-based plating layer of each of the starting materials (1) and (2) was 40 g/m² or less and was less than the deposition amount of the aluminum-based plating layer of the starting materials (3) and (5) (Table 4 and FIG. 7F). On the other hand, in Comparative example 9, although the combination of the type of the starting material and the sheet thickness was the same as in Example 14, the deposition amount of the aluminum-based plating layer was the same, 80 g/m² or less, for all the starting materials. In Example 14, heating the overlap part, which was a thin-plated part, was promoted, and the heating completion time of the blank was substantially reduced compared with Comparative example 9. In Example 14, the process window was enlarged by 50 or more seconds compared with Comparative example 9. In Comparative example 9, the process window of the heating condition was lost (negative).

For example, in Example 16, the starting material (1) and the starting material (3) form an overlap part having the largest sheet thickness tₘₐₓ = 3.0 mm. In Example 16, the deposition amount of the aluminum-based plating layer of each of the starting materials (1) and (3) was 40 g/m² and was less than the deposition amount of the aluminum-based plating layer of each of the starting materials (2) and (5) (Table 4 and FIG. 7F). In Example 16, in addition, the starting material (3) and the starting material (4) form an overlap part having the largest sheet thickness tₘₐₓ = 3.0 mm. In Example 16, the deposition amount of the aluminum-based plating layer of each of the starting materials (3) and (4) was 40 g/m² and was less than the deposition amount of the aluminum-based plating layer of each of the starting materials (2) and (5). On the other hand, in Comparative example 11, although the combination of the type of the starting material and the sheet thickness was the same as in Example 16, the deposition amount of the aluminum-based plating layer was the same, 80 g/m², for all the starting materials. In Example 16, heating the overlap part, which was a thin-plated part, was promoted, and the heating completion time of the blank was substantially reduced compared with Comparative example 11. In Example 16, the process window was enlarged by 30 or more seconds compared with Comparative example 11.

In Example 19, the starting materials (1) and (3) and the starting materials (3) and (4) each form an overlap part having the largest sheet thickness tₘₐₓ = 3.2 mm. In Example 19, the deposition amount of the aluminum-based plating layer of the starting material (3) was 40 g/m², and the deposition amount of the aluminum-based plating layer of each of the starting materials (1) and (4) was 60 g/m². In Example 19, again, heating the overlap parts, which were thin-plated parts, was promoted, and the heating completion time of the blank was reduced compared with the comparative examples. In Example 18, the heating completion time of the blank was further reduced compared with Example 19. In Example 18, the deposition amount of the aluminum-based plating layer of each of the starting materials (1) and (4) that form an overlap part having the largest sheet thickness tₘₐₓ with the starting material (3) was 50 g/m².

In Example 20, the starting materials (1) and (3) and the starting materials (3) and (4) each form an overlap part having the largest sheet thickness tₘₐₓ = 3.0 mm. In Example 20, the deposition amount of the aluminum-based plating layer of the starting material (4) was 80 g/m², and the deposition amount of the aluminum-based plating layer of the starting materials (1) and (3) was 60 g/m². In Example 20, again, since at least one of the two starting materials forming the overlap part was a thin-plated part having a deposition amount of 60 g/m² or less, heating the overlap part was promoted, and the heating completion time of the blank was reduced compared with the comparative examples.

In Example 21, the starting materials (1) and (3) and the starting materials (3) and (4) each form an overlap part having the largest sheet thickness tₘₐₓ = 3.2 mm. In Example 21, the deposition amount of the aluminum-based plating layer of the starting materials (1) and (4) was 80 g/m², and the deposition amount of the aluminum-based plating layer of the starting material (3) was 60 g/m². In Example 21, again, since at least one of the two starting materials forming the overlap part was a thin-plated part having a deposition amount of 60 g/m² or less, heating the overlap part was promoted, and the heating completion time of the blank was reduced compared with the comparative examples. In Example 21, the starting materials (1) and (4) were provided with a black film to increase the emissivity of the overlap part in advance, the heating completion time of the blank was further reduced compared with Example 20.

### [Second Example]

The same analysis as in the first example was performed of the press forming (hot stamping) of structural members that were double door ring parts for different types and sheet thicknesses of starting materials included in the structural members and different division patterns of the structural members.

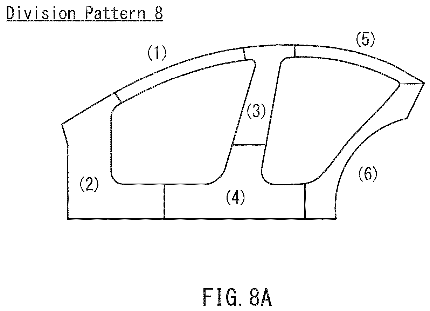

The steel sheets as the starting materials were selected from those shown in Table 1, as in the first embodiment. The division patterns of the structural members are shown in FIGS. 8A to 8D. FIGS. 8A to 8D show the number of steel sheets (starting materials) included in the structural members that are double door ring parts and the positions of the junctures between the steel sheets in the structural members. In FIGS. 8A to 8D, each steel sheet as the starting material is denoted by a numeral in parentheses.

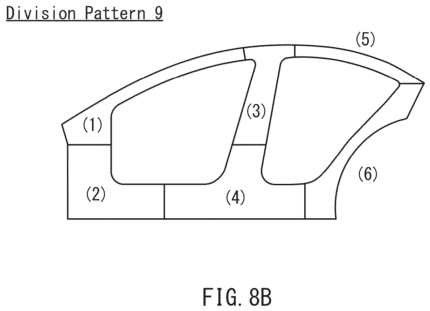

Table 5 shows analysis conditions and results for division patterns 8 and 9 shown in FIGS. 8A and 8B. In FIGS. 8A and 8B, the structural member is formed of six starting materials (1) to (6). The starting materials (1) to (6) are each lap-joined to adjacent starting materials.

### [Table 5]

**TABLE 5**

| Symbol | Division pattern | Starting material (1) | | Starting material (2) | | Starting material (3) | | Starting material (4) | | Starting material *(5)* | | Starting material (6) | | Smallest sheet thickness tₘᵢₙ, mm | Largest sheet thickness tₘₐₓ, mm | Time required to reach 910°C, s | Heating completion time, s | PW, s |
|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 22 | 8 | C40 | 1.4 | A80 | 1.4 | A40 | 1.8 | D40 | 1.4 | B40 | 1.0 | D40 | 1.2 | 1.0 | 3.2 | 107.0 | 344.5 | 7.5 |
| Example 23 | 8 | A40 | 1.6 | B80 | 1.3 | B40-1 | 1.8 | A40 | 1.4 | A80 | 1.2 | A80 | 1.0 | 1.0 | 3.4 | 124.5 | 306.0 | 63.5 |
| Example 24 | 9 | B40-1 | 1.4 | A80 | 1.4 | C40 | 1.6 | B40 | 1.4 | B40-1 | 1.0 | A40-1 | 1.0 | 1.0 | 3.0 | 95.5 | 323.0 | 17.5 |
| Comparative example 12 | 8 | C80 | 1.4 | A80 | 1.4 | A80 | 1.8 | D80 | 1.4 | B80 | 1.0 | D80 | 1.2 | 1.0 | 3.2 | 124.5 | 399.5 | -30.0 |
| Comparative example 13 | 9 | B80 | 1.4 | A80 | 1.4 | C80 | 1.6 | B80 | 1.4 | B80 | 1.0 | A80 | 1.0 | 1.0 | 3.0 | 124.5 | 374.5 | *-5.0* |

With reference to Table 5, in Eexample 22, the starting materials (1) and (3) and the starting materials (3) and (4) each form an overlap part having the largest sheet thickness tₘₐₓ = 3.2 mm, and the deposition amount of the aluminum-based plating layer of each of the starting materials (1), (3) and (4) was less than the deposition amount of the aluminum-based plating layer of the starting material (2). In Example 23, the starting material (1) and the starting material (3) form an overlap part having the largest sheet thickness tₘₐₓ = 3.4 mm, and the deposition amount of the aluminum-based plating layer of each of the starting materials (1) and (3) was less than the deposition amount of the aluminum-based plating layer of the starting materials (2), (5) and (6). In Example 24, the starting materials (1) and (3) and the starting materials (3) and (4) each form an overlap part having the largest sheet thickness tₘₐₓ = 3.0 mm, and the deposition amount of the aluminum-based plating layer of each of the starting materials (1), (3) and (4) was less than the deposition amount of the aluminum-based plating layer of the starting material (2). In Examples 22 to 24, the deposition amount of the aluminum-based plating layer of the starting materials forming the overlap part, which was the thickest part, was 40 g/m². On the other hand, in Comparative examples 12 and 13, the deposition amount of the aluminum-based plating layer was the same, 80 g/m², for all the starting materials.

As can be seen from Table 5, in Examples 22 to 24, since the overlap part having the largest sheet thickness tₘₐₓ was a thin-plated part, heating of the overlap part was promoted, and the heating completion time of the blank was substantially reduced compared with Comparative examples 12 and 13. As a result, in Examples 22 to 24, the process window of the heating condition was significantly enlarged compared with Comparative examples 12 and 13.

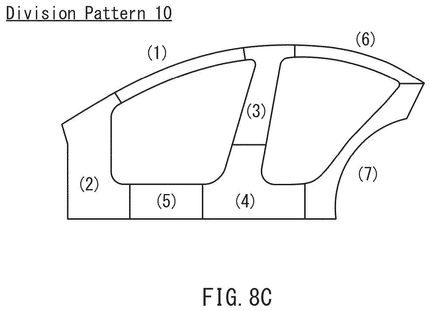

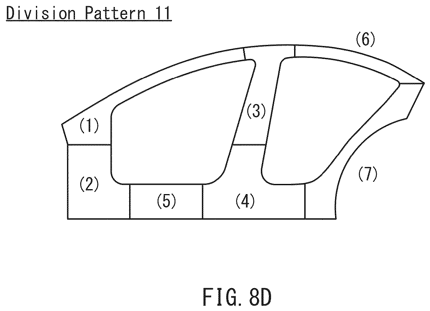

Table 6 shows analysis conditions and results for division patterns 10 and 11 shown in FIGS. 8C and 8D. In FIGS. 8C and 8D, the structural member is formed of seven starting materials (1) to (7). The starting materials (1) to (7) are each lap-joined to adjacent starting materials.

### [Table 6]

**TABLE 6**

| Symbol | Division pattern | Starting material (1) | | Starting material (2) | | Starting material (3) | | Starting material (4) | | Starting material (5) | | Starting material (6) | | Starting material (7) | | Smallest sheet thickness tₘᵢₙ, mm | Largest sheet thickness tₘₐₓ, mm | Time required to reach 910°C, s | Heating completion time, s | PW, s |
|---|---|---|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | |
| Example 25 | 10 | C40 | 1.6 | A80 | 1.4 | A40-1 | 1.8 | D40-1 | 1.2 | D80 | 1.4 | B40 | 1.2 | D40-1 | 1.0 | 1.0 | 3.4 | 89.5 | 306.0 | 28.5 |
| Example 26 | 10 | A40 | 1.6 | A80 | 1.4 | B40-1 | 1.8 | A40 | 1.2 | B40 | 1.2 | A40 | 1.2 | A40 | 1.2 | 1.2 | 3.4 | 128.5 | 306.0 | 67.5 |
| Example 27 | 11 | B40 | 1.6 | B80 | 1.3 | C40-1 | 1.8 | E40 | 1.2 | A80-1 | 1.2 | B40-1 | 1.2 | A40-1 | 1.0 | 1.0 | 3.4 | 95.5 | 306.0 | 34.5 |
| Comparative example 14 | 10 | C80 | 1.6 | A80 | 1.4 | A80 | 1.8 | D80 | 1.2 | D80 | 1.4 | B80 | 1.2 | D80 | 1.2 | 1.2 | 3.4 | 124.5 | 424.5 | -55.0 |
| Comparative example 15 | 11 | B80 | 1.6 | A80 | 1.4 | C80 | 1.8 | E80 | 1.2 | A80 | 1.2 | B80 | 1.2 | A80 | 1.0 | 1.0 | 3.4 | 124.5 | 424.5 | -55.0 |

With reference to Table 6, in Examples 25 and 27, the starting material (1) and the starting material (3) form an overlap part having the largest sheet thickness tₘₐₓ = 3.4 mm, and the deposition amount of the aluminum-based plating layer of each of the starting materials (1) and (3) was less than the deposition amount of the aluminum-based plating layer of each of the starting materials (2) and (5). In Example 26, the starting material (1) and the starting material (3) form an overlap part having the largest sheet thickness tₘₐₓ = 3.4 mm, and the deposition amount of the aluminum-based plating layer of each of the starting materials (1) and (3) was less than the deposition amount of the aluminum-based plating layer of the starting material (2). In Examples 25 to 27, the deposition amount of the aluminum-based plating layer of the starting materials forming the overlap part, which was the thickest part, was 40 g/m². On the other hand, in Comparative examples 14 and 15, the deposition amount of the aluminum-based plating layer was the same, 80 g/m², for all the starting materials.

As can be seen from Table 6, in Examples 25 to 27, since the overlap part having the largest sheet thickness tₘₐₓ was a thin-plated part, heating of the overlap part was promoted, and the heating completion time of the blank was substantially reduced compared with Comparative examples 14 and 15. As a result, in Examples 25 to 27, the process window of the heating condition was significantly enlarged compared with Comparative examples 14 and 15.

### [Third Example]

In order to check the effect of the difference between the largest sheet thickness tₘₐₓ and the smallest sheet thickness tₘᵢₙ on the press forming (hot stamping) of structural members that are single door ring parts, the same analysis as in the first example was performed for different values of tₘₐₓ/tₘᵢₙ. Table 7 shows analysis conditions and results.

### [Table 7]

**TABLE 7**

| Symbol | Division pattern | Starting material (1) | | Starting material (2) | | Starting material (3) | | Starting material (4) | | Starting material (5) | | Smallest sheet thickness tₘᵢₙ, mm | Largest sheet thickness tₘₐₓ, mm | Sheet thickness ratio t_{max/}tₘᵢₙ | Time required to reach 910°C, s | Heating completion time, s | PW, s |
|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | | |
| Test example 1 | 7- overlap | A40 | 1.6 | A40 | 1.4 | C40 | 1.4 | A40 | 1.2 | A80 | 1.4 | 1.2 | 3.0 | 2.5 | 129.0 | 323.0 | 51.0 |
| Test example 2 | 5- overlap | C40 | 1.2 | B80 | 1.6 | B40 | 2.2 | A40 | 1.2 | A80 | 1.6 | 1.2 | 3.4 | 2.8 | 129.0 | 366.0 | 8.0 |
| Test example 3 | 7- overlap | C40-1 | 1.8 | B80 | 1.6 | B40-1 | 2.6 | A40 | 1.2 | A80 | 1.6 | 1.2 | 4.4 | 3.7 | 129.0 | 358.5 | 15.5 |
| Test example 4 | 5- overlap | A40 | 1.0 | A80 | 1.4 | A40 | 2.6 | A40 | 1.0 | A80 | 1.4 | 1.0 | 3.6 | 3.6 | 124.5 | 387.5 | -18.0 |
| Test example 5 | 7- overlap | A40-1 | 1.0 | A80 | 1.4 | A40-1 | 3.5 | A40-1 | 1.0 | A80 | 1.4 | 1.0 | 4.5 | 4.5 | 124.5 | 369.3 | 0.3 |
| Reference example | 5- overlap | C80 | 1.4 | A80 | 1.4 | A80 | 1.4 | D80 | 1.4 | B80 | 1.4 | 1.4 | 2.8 | 2.0 | 174.5 | 305.0 | 114.5 |
| Comparative example 16 | 7- overlap | A80 | 1.6 | A80 | 1.4 | C80 | 1.6 | A80 | 1.2 | A80 | 1.4 | 1.2 | 3.2 | 2.7 | 149.5 | 399.5 | -5.0 |

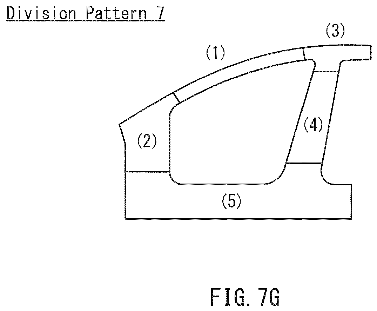

The division pattern in Test examples 1, 3 and 5 and Comparative example 16 was the division pattern 7 shown in FIG. 7G. In Test examples 1 and 3, the starting materials (1) and (3) form an overlap part having the largest sheet thickness tₘₐₓ. In Test examples 1 and 3, the deposition amount of the aluminum-based plating layer of each of the starting materials (1) and (3) was 60 g/m² or less and was less than the deposition amount of the aluminum-based plating layer of at least one of the other starting materials. In Test example 5, the starting materials (1) and (3) and the starting materials (3) and (4) each form an overlap part having the largest sheet thickness tₘₐₓ. In addition, in Test example 5, the deposition amount of the aluminum-based plating layer of each of the starting materials (1), (3) and (4) was 60 g/m² or less and was less than the deposition amount of the aluminum-based plating layer of the other starting materials. In Test example 3, the surfaces of the starting materials (1) and (3) that were located on the outer sides of the overlap part were coated with a black film. In Test example 5, the surfaces of the starting materials (1), (3) and (4) that were located on the outer sides of the overlap part was coated with a black film. In Comparative example 16, the deposition amount of the aluminum-based plating layer was the same, 80 g/m², for all the starting materials.

The division pattern in Test examples 2 and 4 and Reference example was the division pattern 5 shown in FIG. 7E. In Test examples 2 and 4, the starting materials (1) and (3) and the starting materials (3) and (4) each form an overlap part having the largest sheet thickness tₘₐₓ. In addition, in Test examples 2 and 4, the deposition amount of the aluminum-based plating layer of each of the starting materials (1), (3) and (4) was 60 g/m² or less and was less than the deposition amount of the aluminum-based plating layer of the other starting materials. In Reference example, all the starting materials (1) to (5) had an equal sheet thickness and an equal deposition amount of the aluminum-based plating layer of 80 g/m².

In Reference example, there was no difference in sheet thickness between the starting materials (1) to (5), and the ratio of the largest sheet thickness tₘₐₓ (sheet thickness of the overlap part) to the smallest sheet thickness tₘᵢₙ (sheet thickness of the starting materials (1) to (5)): t_{max/}tₘᵢₙ was 2.0. In Reference example, the difference (tₘₐₓ/tₘᵢₙ) between the largest sheet thickness tₘₐₓ and the smallest sheet thickness tₘᵢₙ was not large, so that even when the deposition amount of the aluminum-based plating layer in the overlap part was as high as 80 g/m², a process window of the heating condition was able to be ensured. On the other hand, when there is a difference in sheet thickness between the starting materials (1) to (5), the difference (tₘₐₓ/tₘᵢₙ) between the largest sheet thickness tₘₐₓ and the smallest sheet thickness tₘᵢₙ was more than 2.0. In this case, the effect of forming the overlap part as a thin-plated part was likely to markedly manifest itself.

As can be seen from Table 7, when the deposition amount of the aluminum-based plating layer of the starting materials forming the overlap part having the largest sheet thickness tₘₐₓ was 60 g/m² or less, even if t_{max/}tₘᵢₙ was on the order of 3.0, the heating completion time was less likely to be long, and a process window was able to be ensured (Test examples 1 and 2). Furthermore, when the outside of the overlap part having the largest sheet thickness tₘₐₓ was provided with a black film, even if t_{max/}tₘᵢₙ was more than 3.0, the heating completion time was unlikely to be long, and a process window was able to be ensured (Test example 3). However, even when each of the starting materials forming the overlap part having the largest sheet thickness tₘₐₓ was provided with a black film, it was difficult to ensure the process window, if t_{max/}tₘᵢₙ was more than 4.0 (Test example 5).

Under the conditions of this analysis, it can be said that when there is a difference in sheet thickness between the starting materials, it is preferable that t_{max/}tₘᵢₙ ≤ 3.0. However, when the outside of the overlap part having the largest sheet thickness tₘₐₓ is provided with a black film, it is possible that t_{max/}tₘᵢₙ ≤ 4.0.

For Test examples 1 and 3 and Comparative example 16, the productivity of the structural member and the emissions ratio of greenhouse effect gas were evaluated. Table 8 shows evaluation results.

### [Table 8]

**TABLE 8**

| Symbol | Division pattern | Productivity, items/min | Emissions ratio of greenhouse effect gas during production |
|---|---|---|---|
| Test example 1 | 7- overlap | 3.71 | 82% |
| Test example 3 | 7- overlap | 3.34 | 91% |
| Comparative example 16 | 7- overlap | 3.00 | 100% |

As shown in Table 8, in Test examples 1 and 3, the productivity of the structural member was improved compared with Comparative example 16, since the heating completion time of the blank was reduced compared with Comparative example 16 (Table 7). Furthermore, in Test examples 1 and 3, the heating completion time of the blank was reduced compared with Comparative example 16, and the energy consumption required for production of the structural member was reduced, so that the emissions ratio of the greenhouse effect gas during production was also reduced. "Productivity" in Table 8 means the number of blanks (structural members) that can be heat-treated in a heating furnace in one minute. "Emissions ratio of greenhouse effect gas" means the ratio of emissions of greenhouse effect gas with respect to Comparative example 16. The emissions of greenhouse effect gas in the heating step was determined by multiplying the greenhouse effect gas emissions per kWh of electricity of Japan's average power in 2018 (LCA database, National Institute of Advanced Industrial Science and Technology, IDEAv3.2) by the power consumption per structural member allocated on the assumption that the power consumption per hour of the multi-stage electric heating furnace for hot stamping blank heating was 450 kWh, the furnace temperature was 920°C, the operating time per day was 15 hours, the heating and waiting time for the heating furnace was 3 hours, and the members were produced with the productivity described in Table 8. The emissions of greenhouse effect gas in the other steps (other than the heating step) in production of the structural member was calculated in the method described in a published literature concerning LCA calculation for automobile parts (Masahiro Kubo and two others, "Evaluation of the Life Cycle Greenhouse Gas (GHG) Emissions of a Lightweight Steel Body and Part", JSAE Annual Congress (Spring) Proceedings, Society of Automotive Engineers of Japan, Inc., 2022).

### REFERENCE SIGNS LIST

- 10:: structural member
- 11:: member main body
- 20, 20A:: blank
- 21:: steel sheet (first steel sheet)
- 21a:: base steel sheet
- 21b:: aluminum-based plating layer
- 22:: steel sheet (second steel sheet)
- 22a:: base steel sheet
- 22b:: aluminum-based plating layer
- 23:: steel sheet (third steel sheet)
- 23a:: base steel sheet
- 23b:: aluminum-based plating layer
- 25:: film
- 40:: press tooling
- 111:: front pillar
- 112:: center pillar
- 113:: rocker
- 111a, 114a:: curved part
- 241, 242, 243:: overlap part

## Claims

1. A blank for hot stamping, comprising:
multiple steel sheets that are disposed to form an annular shape in plan view of the blank and joined to each other,
wherein the multiple steel sheets include a first steel sheet, a second steel sheet and a third steel sheet,
an end part of the first steel sheet is overlaid on and joined to an end part of the second steel sheet, thereby forming an overlap part having a largest sheet thickness in the blank with the end part of the second steel sheet,
at least one of the first steel sheet and the second steel sheet and the third steel sheet are each a plated steel sheet having a base steel sheet and an aluminum-based plating layer that covers both surfaces of the base steel sheet, and
a deposition amount (g/m²) of the aluminum-based plating layer on both surfaces of the base steel sheet of at least one of the first steel sheet and the second steel sheet is 60 or less and is less than a deposition amount (g/m²) of the aluminum-based plating layer on both surfaces of the base steel sheet of the third steel sheet.

2. The blank according to Claim 1, wherein the multiple steel sheets include two or more steel sheets having different sheet thicknesses, and
provided that a sheet thickness of the overlap part is tₘₐₓ, and a sheet thickness of a steel sheet having a smallest sheet thickness among the multiple steel sheets is tₘᵢₙ, t_{max/}tₘᵢₙ ≤ 3.0.

3. The blank according to Claim 1, wherein the multiple steel sheets include two or more steel sheets having different sheet thicknesses,
provided that a sheet thickness of the overlap part is tₘₐₓ, and a sheet thickness of a steel sheet having a smallest sheet thickness among the multiple steel sheets is tₘᵢₙ, t_{max/}tₘᵢₙ ≤ 4.0, and
a surface of at least one of the first steel sheet and the second steel sheet that is located on an outer side of the overlap part is coated with a film that is black in color.

4. A production method for a structural member, comprising:
a step of preparing the blank according to any one of Claims 1 to 3;
a step of heating the multiple steel sheets included in the blank to an austenite transformation completion temperature or higher; and
a step of shaping and quenching the heated blank into a structural member having an annular shape in plan view with press tooling.

5. A structural member, comprising:
a member main body that is formed of multiple steel sheets joined to each other and has an annular shape in plan view,
wherein the multiple steel sheets include a first steel sheet, a second steel sheet and a third steel sheet,
an end part of the first steel sheet is overlaid on and joined to an end part of the second steel sheet, thereby forming an overlap part having a largest sheet thickness in the member main body with the end part of the second steel sheet,
at least one of the first steel sheet and the second steel sheet and the third steel sheet are each a plated steel sheet having an aluminum-based plating layer on both surfaces of a base steel sheet, and
a thickness of the aluminum-based plating layer of at least one of the first steel sheet and the second steel sheet is less than a thickness of the aluminum-based plating layer of the third steel sheet.

6. The structural member according to Claim 5, wherein in the overlap part, provided that a maximum value of a Vickers hardness of a steel sheet among the first steel sheet and the second steel sheet that is located on a front surface side of the member main body is HVₘₐₓ, and a minimum value of the Vickers hardness is HVₘᵢₙ, HVₘₐₓ-HVₘᵢₙ is 30% or less of HVₘₐₓ.

7. The structural member according to Claim 5, wherein the member main body includes a curved part that is convexly curved outward of the member main body in plan view of the structural member, and
at least one of the first steel sheet and the second steel sheet is located in the curved part.

8. The structural member according to any one of Claims 5 to 7, wherein the structural member is a door ring part of an automobile, and
the member main body includes a front pillar, a center pillar and a rocker that connects the front pillar and the center pillar to each other.
